(19) Europäisches Patentamt
European Patent Office
Office européen des brevets

(11) **EP 1 747 155 B1**

(12) **EUROPÄISCHE PATENTSCHRIFT**

(45) Veröffentlichungstag und Bekanntmachung des Hinweises auf die Patenterteilung:
**09.07.2008 Patentblatt 2008/28**

(51) Int Cl.:
***B65G 1/137*** *(2006.01)*

(21) Anmeldenummer: 05754031.2

(22) Anmeldetag: **19.05.2005**

(86) Internationale Anmeldenummer:
**PCT/EP2005/005445**

(87) Internationale Veröffentlichungsnummer:
**WO 2005/113389 (01.12.2005 Gazette 2005/48)**

(54) **KOMMISSIONIERVERFAHREN UND KOMMISSIONIERVORRICHTUNG**

COMMISSIONING METHOD AND COMMISSIONING DEVICE

PROCEDE ET DISPOSITIF DE PREPARATION DE COMMANDES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.05.2004 DE 102004026510**
**19.05.2004 DE 102004026511**

(43) Veröffentlichungstag der Anmeldung:
**31.01.2007 Patentblatt 2007/05**

(73) Patentinhaber: **SSI Schäfer Peem GmbH**
**8051 Graz-Gösting (AT)**

(72) Erfinder:
• **SCHAEFER, Gerhard**
**57290 Neunkirchen (DE)**

• **GUDEHUS, Timm**
**22587 Hamburg (DE)**

(74) Vertreter: **Steil, Christian**
**Witte, Weller & Partner**
**Postfach 10 54 62**
**70047 Stuttgart (DE)**

(56) Entgegenhaltungen:
**EP-A- 0 839 113**

• **CHARLES G.PETERSEN: "an evaluation of order picking policies for amil order companies" 2000, PRODUCTION AND OPERATIONS MANAGEMENT SOCIETY , USA 9 , XP002345775 Seite 319 - Seite 335**

**Beschreibung**

Die vorliegende Erfindung betrifft ein Verfahren zum Kommissionieren von Artikeln aus einer ersten Mehrzahl von Bereitstellungsabschnitten in eine entsprechende Mehrzahl von Auftragsablageabschnitten mittels einer zweiten Mehrzahl von Kommissionierern,

- wobei ein Bereitstellungsabschnitt, in dem ein bestimmtes Artikelsortiment bereitgestellt ist, und ein Auftragsablageabschnitt, an dem aus dem Artikelsortiment für einen Auftrag zusammengestellte Artikel abgelegt werden, jeweils eine Kommissionierzone bilden, so dass eine erste Mehrzahl von Kommissionierzonen gebildet ist, die gemeinsam einen Kommissionierbereich bilden, und
- wobei ein Kommissionierrechner (auch Kommissionier-Leitrechner genannt) für die Kommissionierzonen jeweils Zonenaufträge erzeugt und diese den Kommissionierern übermittelt.

Die vorliegende Erfindung betrifft ferner eine entsprechende Kommissioniervorrichtung, die insbesondere zur Durchführung des Verfahrens geeignet ist.

Ein derartiges Kommissionierverfahren ist bekannt aus der EP 0 839 113.B1 [9].

Kommissionieren ist das Zusammenstellen von Ware aus einem bereitgestellten Artikelsortiment nach vorgegebenen Aufträgen [1; 2; 3]. Ein Kommissioniersystem soll diese Aufgabe für einen geforderten Durchsatz an Artikeln bzw. Artikeleinheiten - auch Warenstücke oder Pickeinheiten genannt - mit minimalem Personaleinsatz bei kurzen Auftragsdurchlaufzeiten möglichst zuverlässig, fehlerfrei und kostengünstig erfüllen [1; 2; 3; 4; 5].

Das Kommissionieren von Artikeln ist eine komplexe Aufgabe, insbesondere dann, wenn das Gesamtsortiment der zu kommissionierenden Artikel heterogen ist, sei es hinsichtlich der Form der Artikel, der Gängigkeit der Artikel (Schnellläufer, Langsamläufer etc.) und/oder anderer Kriterien.

Die möglichen technischen Alternativen für die Bereitstellung der Zugriffsmengen, für die Fortbewegung des Kommissionierers, für die Entnahme der Ware sowie für die Abgabe der Auftragsmengen sind beschrieben in "Logistik - Grundlagen, Strategien, Anwendungen", Dr. Timm Gudehus, 2. Auflage, Springer Verlag, 2004 [2].

Diese grundlegenden Prinzipien äußern sich in verschiedenen Ausgestaltungen von Kommissioniersystemen. So gibt es beispielsweise die klassischen Kommissionierautomaten. Diese sind für schnelllaufende Artikel geeignet, die automatisiert handhabbar sind, beispielsweise quaderförmige Schachteln oder ähnliches. Die Artikel werden dabei automatisiert, gesteuert von einem Kommissionierrechner, aus Schächten auf ein Förderband abgeworfen und so zu Kundenaufträgen zusammengestellt.

Wenn das Artikelsortiment auch langsam laufende Artikel beinhaltet und/oder Artikel, die nur schwer automatisiert handhabbar sind, oder wenn das Artikelsortiment insgesamt heterogen ist, werden gewöhnlich Personen zum Kommissionieren eingesetzt. Neben herkömmlichen rein manuellen Kommissioniersystemen gibt es Kommissioniersysteme, bei denen die Kommissionierer von einem Kommissionierrechner geführt werden. Dies kann im einfachsten Fall durch Anzeigeelemente erfolgen. Es ist jedoch auch möglich, dass der Kommissionierer ein Terminal, insbesondere ein drahtloses Terminal wie ein Funkterminal besitzt, auf dem er Anweisungen von dem Kommissionierrechner entgegennimmt.

Aus der eingangs genannten EP 0 839 113 B1 [9] ist ein Kommissioniersystem mit zumindest einem solchen Zentralband zur Aufnahme von gemäß einem Auftrag zusammenzustellenden, von Kommissionierern aus einem Lager zu entnehmenden Artikeln bekannt. Die zu dem Auftrag zusammengestellten Artikel werden von dem Zentralband (Bandförderer) an einer Übergabestelle in Auftragsbehälter übergeben. Die Auftragsbehälter werden mittels einer Förderanlage abtransportiert.

Über dem Zentralband ist eine Vielzahl von nebeneinander angeordneten Zwischenspeicherbehältern angeordnet. Die Zwischenspeicherbehälter sind zur vorübergehenden Aufnahme von jeweils zu einem Auftrag gehörenden Artikeln eingerichtet und mittels eines Kommissionierrechners gesteuert automatisiert auf den Zentralförderer entleerbar.

Das Kommissioniersystem ist ferner dazu ausgelegt, eine Mehrzahl von Kommissionierern zu beschäftigen. Durch eine vorbestimmte Anzahl von nebeneinander angeordneten Zwischenspeicherbehältern ist jeweils eine Kommissionierzone festgelegt (dort Kommissionierbereich genannt). Der Kommissionierer wird mittels eines Funkterminals geführt, und zwar in das Lager. Dabei ist jeder Kommissionierzone eine vorbestimmte Anzahl von Produktarten in dem Lager zugeordnet.

Ein ähnliches System ist beschrieben in der WO 96/36547. In diesem Dokument wird vorgeschlagen, dass ein Kommissionierer von einem zentralen Kommissionierrechner so gesteuert wird, dass er sich fortschreitend entlang der Zwischenspeicherbehälter (bzw. entlang des Bereichsförderers) bewegt.

In der EP 0 839 113 B1 wird hingegen vorgeschlagen, dass der Steuerrechner dazu eingerichtet ist, jeden der Kommissionierer über das Funkterminal außer in eine zugeordnete eigene Kommissionierzone auch in zumindest eine der zugeordneten Kommissionierzone benachbarte Ergänzungs-Kommissionierzone zu führen.

Hierdurch soll erreicht werden, dass die Effizienz des Systems von Unterschieden in der individuellen Leistung der einzelnen Kommissionierer und/oder ihrer Arbeitsbelastung praktisch unbeeinflusst bleibt. Als besonders bevorzugt wird dabei angesehen, wenn ein Kommissionierer dann, wenn sein Nachbar überfordert ist, in dessen Bereitstellungsabschnitt (Lagerbereich) gehen kann, um sozusagen "auszuhelfen". Hierdurch soll das System in der Lage sein, Unterschiede in den persönlichen Verteilzeiten eines Kommissionierers aufzunehmen, indem es die Arbeit automatisch auf benachbarte Kommissionierer aufteilen kann.

Mit anderen Worten wird dann, wenn ein Kommissionierer überlastet ist, ein Kommissionierer aus einer Nachbarzone in die Kommissionierzone des überlasteten Kommissionierers geführt, um dort diese Überlastung abzubauen.

Dabei wird alternativ auch vorgeschlagen, den "aushelfenden Kommissionierer" zu den Auftragsablageabschnitten des überlasteten Kommissionierers zu führen, oder sowohl zu den Bereitstellungsabschnitten und den Auftragsablageabschnitten des überlasteten Kommissionierers. Als besonders bevorzugt wird jedoch herausgestellt, dass der aushelfende Kommissionierer in den Bereitstellungsabschnitt (Lagerbereich) des überlasteten Kommissionierers geführt wird.

Die Bedeutung dieser Strategie wird anhand einer Simulation in der EP 0 839 113 B1 erläutert. Aus der Simulation geht hervor, dass, bezogen auf eine simulierte Gesamtarbeitszeit von 5 Stunden x 20 Kommissionierern = 100 Stunden, sich eine Einsparung gegenüber einer vereinfachten Strategie von 1,09 Stunden ergibt. Dies bedeutet, dass die dort vorgeschlagene Kommissionierstrategie eine Verbesserung von 1 % gegenüber einem Kommissioniersystem erreicht, bei dem jeder Kommissionierer in seinem Kommissionierbereich (Kommissionierzone im Sprachgebrauch der vorliegenden Anmeldung) verbleibt.

Vor diesem Hintergrund ist es die Aufgabe der vorliegenden Erfindung, ein deutlich effizienteres Kommissionierverfahren bzw. eine deutlich effizientere Kommissioniervorrichtung anzugeben.

Diese Aufgabe wird bei dem eingangs genannten Kommissionierverfahren gemäß einem ersten Aspekt der Erfindung dadurch gelöst, dass

- in einer Kommissionierzone jeweils nur ein Kommissionierer kommissioniert, so dass die erste Mehrzahl von Kommissionierzonen gleich der zweiten Mehrzahl von Kommissionierern ist, und dadurch, dass

- der Kommissionierrechner die Grenzen zwischen benachbarten Kommissionierzonen mittels einer Zonenzuweisungsstrategie variabel einstellt, um die Größe der Kommissionierzonen in dem Kommissionierbereich und/oder die Anzahl der Kommissionierzonen in dem Kommissionierbereich an variable Kommissioniereinflussfaktoren wie z.B. Kommissionieranforderungen anzupassen.

Bei der eingangs genannten Kommissioniervorrichtung wird die obige Aufgabe gemäß dem ersten Aspekt der Erfindung dadurch gelöst, dass in einer Kommissionierzone jeweils nur ein Kommissionierer angeordnet ist, so dass die erste Mehrzahl von Kommissionierzonen gleich der zweiten Mehrzahl von Kommissionierern ist, und dadurch, dass der Kommissionierrechner dazu ausgelegt ist, die Grenzen zwischen benachbarten Kommissionierzonen mittels einer Zonenzuweisungsstrategie variabel einzustellen, um die Größe der Kommissionierzonen in dem Kommissionierbereich und/oder die Anzahl der Kommissionierzonen in dem Kommissionierbereich an variable Kommissioniereinflussfaktoren anzupassen.

Das erfindungsgemäße Kommissionierverfahren ist deutlich effizienter als das Kommissionierverfahren, das in der EP 0 839 113 B1 vorgeschlagen wird. Denn das erfindungsgemäße Kommissionierverfahren geht von einer Strategie aus, bei der innerhalb einer Kommissionierzone jeweils nur ein einziger Kommissionierer tätig ist. Hierdurch werden Wartezeiten und längere Wege vermieden. Außerdem wird, im Gegensatz zum Stand der Technik, verhindert, dass sich zwei Kommissionierer gegenseitig behindern. Durch den Ausschluss solcher wechselseitigen Behinderungen verringert sich zudem die Fehlerhäufigkeit.

Ferner ist es im Stand der Technik so, dass die Notwendigkeit des "Aushelfens" in fremden Kommissionierzonen in der Regel dann auftreten wird, wenn bei den sogenannten Schnellläufern ein "Engpass" auftritt. Hierdurch wird die Wahrscheinlichkeit der wechselseitigen Behinderung sowie der damit verbundenen Fehlerhäufigkeit noch gesteigert.

Dies wird durch das Konzept, dass ein Kommissionierer jeweils nur in einer Kommissionierzone tätig ist, vollständig verhindert.

Ferner ist der Kommissionierrechner dazu ausgelegt, die Grenzen zwischen benachbarten Kommissionierzonen mittels einer Zonenzuweisungsstrategie variabel einzustellen.

Der Grundgedanke hierfür liegt darin, dass die Kommissionierauslastung der Kommissionierer in der Regel über den Tag verteilt relativ stark variiert. Es gibt bei fast allen Kommissionierzentren kurze Phasen relativ starker Auslastung und längere Phasen, in denen die Kommissionieranlage eher unterlastet ist.

Gemäß der vorliegenden Zonenzuweisungsstrategie ist es nun möglich, die Grenzen zwischen benachbarten Kommissionierzonen so zu verschieben, dass entweder deren Größe verändert wird. Dies kann beispielsweise dann erfolgen, wenn ein Kommissionierer überlastet ist und sein benachbarter Kommissionierer unterlastet. In diesem Fall würde die Kommissionierzone des unterlasteten Kommissionierers, gesteuert durch den Kommissionierrechner, vergrößert werden, und die Kommissionierzone des überlasteten Kommissionierers verkleinert.

Das Prinzip, dass jeder Kommissionierer nur in seiner Zone tätig ist, bleibt dabei jedoch aufrechterhalten.

Wenn aufgrund einer stärkeren Unterlastung des Gesamtsystems nur eine geringere Anzahl an Kommissionierern erforderlich ist, kann die Zonenzuweisungsstrategie durch Verschieben der Grenzen zwischen den Zonen auch die Anzahl der Zonen verändern.

Falls in einem Kommissionierbereich, der beispielsweise zehn Kommissionierzonen aufweist, eine deutlichere Unterlastung auftritt, können beispielsweise nur neun, acht, sieben, sechs,... Kommissionierer tätig werden, wobei eine entsprechende Anzahl von Kommissionierzonen gebildet wird. In diesem Fall könnte beispielsweise der gesamte Kommissionierbereich in nur fünf Kommissionierzonen aufgeteilt werden. Das Prinzip, dass jeder Kommissionierer in seiner eigenen Zone bleibt und nicht über die Grenze zu einer benachbarten Kommissionierzone übertritt, bleibt jedoch hierbei erhalten.

Aus dem obigen Beispiel wird leicht ersichtlich, dass sich die Effizienz des Kommissionierverfahrens bzw. des erfindungsgemäßen Kommissioniersystems erheblich steigern lassen. Jedenfalls kann eine deutlich höhere Effizienz erzielt werden als die einprozentige Effizienzsteigerung, die in der EP 0 831 113 B1 erzielt wird.

- Die Anzahl der Kommissionierer wird von der Systemsteuerung selbstregelnd dem aktuellen Leistungsbedarf angepasst.

- Die Kommissionierer arbeiten jeder in einem gesonderten Bereich mit kürzesten Wegen ohne gegenseitige Behinderung mit gleichmäßig hoher Auslastung.

- Auch in Spitzenzeiten sind kurze Auftragsdurchlaufzeiten erzielbar.

- Durch die Verantwortung für eine eindeutig zugewiesene Kommissionierzone, die fehlende gegenseitige Behinderung und die reduzierte Verwechslungsgefahr sind eine minimale Fehlerquote und eine maximale Kommissionierqualität erreichbar.

Die obige Aufgabe wird gemäß einem zweiten Aspekt der Erfindung durch ein Kommissionierverfahren gemäß Anspruch 22 und ein zugeordnetes Kommissioniersystem gelöst.

Die Aufgabe wird somit vollkommen gelöst.

Gemäß einer bevorzugten Ausführungsform des erfindungsgemäßen Verfahrens gemäß dem ersten Aspekt der Erfindung beinhalten die Kommissioniereinflussfaktoren die Kommissionierleistung der einzelnen Kommissionierer.

Hierdurch wird die Aufteilung des Kommissionierbereiches in die Kommissionierzonen variabler Größe anhand der Kommissioniererleistung erfolgen. Diese kann beispielsweise gemessen werden durch die Anzahl der "Picks" pro Zeiteinheit und Person, durch die Anzahl der erledigten Aufträge, oder ähnliches.

Ferner ist es vorteilhaft, wenn die Kommissioniereinflussfaktoren die Anzahl der verfügbaren Kommissionierer beinhalten.

Wie oben erwähnt, sofern das System beispielsweise im Normalfall (maximal) zehn Kommissionierzonen beinhaltet, würde die Anzahl der Kommissionierzonen dann, wenn nur acht Kommissionierer zur Verfügung stehen, ebenfalls auf acht verringert werden. Dabei werden naturgemäß die Kommissionierzonen etwas größer, so dass die einzelnen Kommissionierer größere Strecken zu absolvieren haben. Nichtsdestotrotz passt sich das Kommissionierverfahren damit automatisch an die Kommissioniereinflussfaktoren an.

Gemäß einer weiteren bevorzugten Ausführungsform sind die Artikelsortimente der Kommissionierzonen unterschiedlich und ergänzen sich zu einem Gesamtsortiment.

Bei dieser Ausführungsform wird davon ausgegangen, dass das Artikelsortiment einer Kommissionierzone nicht identisch ist mit dem Artikelsortiment einer anderen Kommissionierzone. Hierdurch kann die Zahl der Artikel in dem Gesamtsortiment deutlich erhöht werden. Dabei kann es jedoch sein, dass manche Artikel (z.B. Schnellläufer) in nicht nur einer Kommissionierzone sondern in mehreren Kommissionierzonen vorhanden sind, um den Durchsatz gleichmäßig auf die Zonen zu verteilen.

Dabei ist es besonders bevorzugt, wenn die Kommissioniereinflussfaktoren die Anzahl der Zonenaufträge pro Zeiteinheit beinhalten.

Sofern mit anderen Worten aufgrund einer aktuellen Nachfrage nach bestimmten Artikeln aus beispielsweise einer bestimmten Kommissionierzone die Anzahl der Zonenaufträge für diese Kommissionierzone pro Zeiteinheit ansteigt, kann durch die variable Zonenzuweisungsstrategie die betreffende Kommissionierzone verkleinert werden. Mit anderen Worten wird dann ein Teil dieser Kommissionierzone einer benachbarten Kommissionierzone zugeschlagen.

Gemäß einer weiteren bevorzugten Ausführungsform erhält der Kommissionierrechner Kundenaufträge (also externe Aufträge) und teilt diese in eine dritte Mehrzahl von Zonenaufträgen (auch Teilaufträge genannt) auf. Dabei priorisiert der Kommissionierrechner durch eine Auftragszuweisungsstrategie diejenigen Kundenaufträge, deren Zonenaufträge solche Kommissionierzonen betreffen, deren Auftragsablageabschnitte unterdurchschnittlich ausgelastet sind.

Sofern mit anderen Worten ein Auftragsablageabschnitt einer Kommissionierzone ausgelastet ist, so dass der Kommissionierer in dieser Zone die bestehenden Zonenaufträge zunächst abarbeiten muss, wird kein Kundenauftrag auf die Kommissionierzonen verteilt, der einen Zonenauftrag für diese eine Kommissionierzone beinhaltet, deren Auftragsablageabschnitt vollständig oder nahezu ausgelastet ist.

Hierdurch wird der Durchsatz erhöht, da nur solche Kundenaufträge abgearbeitet werden, die mit hoher Wahrscheinlichkeit auch von den betreffenden Kommissionierern sofort bearbeitet werden können.

Wenn hingegen ein solcher Kundenauftrag einen Artikel aus einer Kommissionierzone betrifft, deren Auftragsablageabschnitt vollständig oder weitgehend ausgelastet ist, wird ein solcher Kundenauftrag gegenüber anderen Kundenaufträgen zurückgestellt.

Von besonderem Vorzug ist es dabei, wenn die Auftragszuweisungsstrategie der Zonenzuweisungsstrategie nach der Art einer Kaskade untergeordnet ist.

Unter "Unterordnung" wird in der Regel eine zeitliche Unterordnung verstanden. Dies bedeutet, dass die Auftragszuweisungsstrategie eine kurzfristige Strategie ist, die einer mittelfristigen Zonenzuweisungsstrategie untergeordnet wird. Mit anderen Worten erfolgt die Neuzuweisung von Kommissionierzonen gemäß der Zonenzuweisungsstrategie dann, wenn die Auftragszuweisungsstrategie nicht hinreichend ist, um einen hohen Durchsatz durch das Kommissioniersystem hindurch zu gewährleisten. Man könnte auch sagen, dass die Zonenzuweisungsstrategie eine langsamere "Regelung" ist als die Auftragszuweisungsstrategie.

Gemäß einer weiteren bevorzugten Ausführungsform bewertet der Kommissionierrechner mittels einer Belegungsstrategie die Gängigkeit der Artikel des Gesamtsortimentes und stellt die Artikelsortimente der einzelnen Kommissionierzonen in Abhängigkeit von dem Ergebnis dieser Bewertung so zusammen, dass die Kommissionierer im Wesentlichen gleichmäßig ausgelastet werden.

Die Gängigkeit von Artikeln ändert sich mit der Zeit. Ein heute sehr populärer Artikel kann morgen oder in einer Woche bereits ein "Ladenhüter" sein.

Demzufolge erfolgt regelmäßig eine Bewertung der Gängigkeit der Artikel, um die Artikel des Gesamtsortimentes so auf die Kommissionierzonen aufzuteilen, dass eine möglichst gleichmäßige Auslastung und ein hoher Durchsatz des Kommissioniersystems erreicht werden.

Von besonderem Vorteil ist es dabei, wenn der Kommissionierrechner einen Artikel, dessen Gängigkeit sich so verändert, dass die Auslastung des Kommissionierers, in dessen Kommissionierzone der Artikel fällt, sich gegenüber der mittleren Auslastung der Kommissionierer um mehr als ein bestimmter Schwellenwert verändert, einer anderen Kommissionierzone zuordnet.

In diesem Fall würde der Restbestand dieses Artikels in dieser. Kommissionierzone abgearbeitet werden und neue Artikel dieses Typs würden in der anderen Kommissionierzone (einer möglicherweise bis dahin unterlasteten Zone) zugewiesen und dort bereitgestellt werden.

Dabei ist es von besonderem Vorteil, wenn die Zonenzuweisungsstrategie der Belegungsstrategie nach der Art einer Kaskade untergeordnet ist.

Dabei geht die Belegungsstrategie generell von einem Normalfall, also einer bestimmten Normalbelegung des Kommissioniersystems aus. Falls man beispielsweise das System auf eine Belegung mit acht Zonen, d.h. acht Kommissionierern optimiert hat, würde man im Rahmen der übergeordneten Belegungsstrategie zunächst versuchen, diese Zonen durch Verteilung der Artikel nach ihrer Gängigkeit möglichst gleichmäßig auszulasten. Wenn im Betrieb ein Artikel kurzfristig sehr stark nachgefragt wird, kann eine solche Spitze möglicherweise mittels der Zonenzuweisungsstrategie "ausgeregelt" werden. Sofern sich herausstellt, dass dieser Artikel dauerhaft populärer ist, würde dies zu einer ständigen Überlastung des betroffenen Kommissionierers führen. Demzufolge würde dieser Artikel dann aufgrund der Belegungsstrategie entweder dem Bereitstellungsabschnitt einer anderen Kommissionierzone zugewiesen werden. Wenn es sich dauerhaft um einen Schnellläufer handelt, kann der Artikel auch innerhalb der Zone in einen Bereich mit kürzeren Zugriffswegen bereitgestellt werden, vorzugsweise einem Durchrollkanal, der unmittelbar über der Ablagestelle angeordnet ist. Der Artikel kann auch zusätzlich in einer weiteren Kommissionierzone bereitgestellt werden, um eine gleichmäßige Verteilung zu erreichen.

Ingesamt ist es vorteilhaft, wenn wenigstens ein Bereitstellungsabschnitt einen Durchlaufkanal aufweist, dessen vorderes Bereitstell-Ende in einem Ablagearbeitsbereich des Kommissionierers angeordnet ist.

Hierdurch werden die bereitgestellten Artikel dem Kommissionierer in der Kommissionierzone in dem Arbeitsbereich bereitgestellt, in dem er auch die Auftragsablage vollzieht.

Beispielsweise kann ein solcher Durchlaufkanal oberhalb oder unterhalb, oder auch neben einem Auftragsablageabschnitt angeordnet sein.

Dabei ist es von besonderem Vorteil, wenn in den Bereitstellungsabschnitten eine vierte Mehrzahl von Durchlaufkanälen vorgesehen ist, an deren hinterem Einlager-Ende eine Einlagergasse angeordnet ist.

Auf diese Weise wird erreicht, dass das Einlagern von bereitzustellenden Artikeln erfolgen kann, während auf der anderen Seite der Durchlaufkanäle die Kommissionierung ununterbrochen fortgesetzt wird.

Die Einlagerung von Artikeln in die Bereitstellungsabschnitte und das Entnehmen von Artikeln hieraus zum Zwecke des Kommissionierens werden hierdurch entkoppelt.

Dabei ist es von besonderem Vorteil, wenn in der Einlagergasse ein Regalbediengerät von dem Kommissionierrechner gesteuert wird, um wenigstens einen Teil der Artikel des Gesamtsortimentes automatisiert einzulagern.

Auf diese Weise erfolgt die Einlagerung der Artikel in die Bereitstellbereiche vollständig oder weitgehend automatisiert. Dabei ist davon auszugehen, dass die Artikel aus einem größeren Lager zunächst geholt werden, beispielsweise auch mittels einer FTS-Anlage oder ähnliches, dann an das Regalbediengerät übergeben werden. Dieses übernimmt dann die automatisierte "Neubefüllung" der Bereitstellabschnitte.

Gemäß einer weiteren, insgesamt besonders bevorzugten Ausführungsform weist wenigstens ein Auftragsablageabschnitt eine fünfte Mehrzahl von Ablagebehältern (im Folgenden auch Zwischenspeicherbehälter genannt) auf, die jeweils zur Aufnahme von wenigstens einem Artikel aus dem Artikelsortiment ausgelegt sind.

Durch das Bereitstellen von Zwischenspeicherbehältern kann ein Zonenauftrag sukzessiv von dem Kommissionierer erfüllt werden, auch dann, wenn er hierzu mehrfach in den Bereitstellungsabschnitt greifen bzw. laufen muss. Durch diese Maßnahme kann ferner erreicht werden, dass eine Mehrzahl von Zonenaufträgen anschließend auf vergleichsweise einfache Weise zu einem Kundenauftrag zusammengeführt werden.

So ist es besonders bevorzugt, wenn unteroder oberhalb der Zwischenspeicherbehälter ein Bereichsförderer angeordnet ist.

Der Bereichsförderer dient dabei zum Abfördern von Zonenaufträgen oder zum Zusammenführen von Zonenaufträgen zu einem Kundenauftrag oder Kundenteilauftrag. Der Bereichsförderer, beispielsweise in Form eines Bandes, kann sowohl ein virtuelles Fenster aufweisen, in welches die Teilaufträge aus den Zonen konsolidiert werden, als auch eine mechanische Teilung durch Trennstege, oder kann auch direkt den Auftragsbehälter befördern.

Hierbei wiederum ist es von besonderem Vorzug, wenn der Kommissionierrechner Zwischenspeicherbehälter auswählen und automatisiert nach unten öffnen kann, um die darin zwischengespeicherten Artikel auf den Bereichsförderer abzugeben.

Hierdurch kann beispielsweise eine synchronisierte Öffnung von Zwischenbehältern aus mehreren Kommissionierzonen erfolgen, um die Zonenaufträge eines Kundenauftrages synchron auf den Bereichsförderer abzugeben. Dieser kann den Kundenauftrag dann auf einfache Weise zusammenführen.

Es versteht sich, dass der Bereichsförderer hierbei unterhalb der Zwischenspeicherbehälter angeordnet sein muss. Dabei kann der Bereichsförderer auch schräg unterhalb der Zwischenspeicherbehälter angeordnet sein, so dass die Artikel über eine Rutsche oder einen sonstigen schrägen Kanal zu dem Bereichsförderer übergeben werden.

Vorteilhaft ist es, wenn der Bereichsförderer ein Förderband aufweist. Dieses kann auf einfache Weise verschiedene Zonenaufträge zu einem Kundenauftrag zusammenführen.

So ist es besonders bevorzugt, wenn der Bereichsförderer parallel zu einer Achse ausgerichtet ist, die durch die Ablagearbeitsbereiche der Kommissionierer in den Kommissionierzonen gebildet ist.

Der Bereichsförderer kann dann für einen Kommissionierbereich (der aus mehreren Kommissionierzonen besteht) einheitlich ausgeführt werden, beispielsweise mittels eines einzigen Förderbandes.

Ferner ist es vorteilhaft, wenn der Kommissionierrechner den Bereichsförderer so ansteuert, dass die darauf abgelegten Artikel zu einem Kundenauftrag oder einem Teil eines Kundenauftrages zusammengefasst werden.

Es versteht sich, dass die Zonenaufträge eines Kommissionierbereiches möglicherweise nur einen Teil eines Kundenauftrages betreffen. Möglicherweise kann eine Kommissionieranlage noch eine weitere Kommissionierzone mit einem weiteren Kommissionierbereich aufweisen. Ferner ist es möglich, in der Kommissionieranlage weitere Kommissioniervorrichtungen zu integrieren, die auf einer anderen Technik beruhen, beispielsweise Kommissionierautomaten oder ähnliches.

Dabei ist es von besonderem Vorteil, wenn quer zu dem Bereichsförderer ein Auftragsbehälterförderer ausgerichtet ist und wenn der Kommissionierrechner den Bereichsförderer und den Auftragsbehälterförderer so ansteuert, dass die auf dem Bereichsförderer abgelegten Artikel in einen auf dem Auftragsbehälterförderer bereitstehenden Auftragsbehälter übergeben werden.

Insgesamt lassen sich folgende Vorteile erzielen.

Durch die Zonenzuweisungsstrategie kann eine optimale Anpassung eines vorgegebenen Kommissionierbereiches aus mehreren Kommissionierzonen an den Kommissionierleistungsbedarf bzw. die Anzahl und die Leistungsfähigkeit der Kommissionierer angepasst werden.

Durch die Belegungsstrategie können die einzelnen Artikel gemäß ihrer Gängigkeit so über die Kommissionierzonen verteilt werden, dass der Stückdurchsatz und damit der Arbeitsanfall annähernd gleich ist. Wenn sich die Gängigkeit eines Artikels so stark verändert, dass die Durchsatzverteilung um mehr als ein Schwellenwert (z.B. $\pm$ 5 %) aus dem Gleichgewicht gebracht wird, wird dessen Bereitstellungsabschnitt in eine andere Kommissionierzone verlegt. Dies kann ohne Umlagern nach der Entnahme der letzten Einheit des Artikelbestands am bisherigen Bereitstellungsabschnitt erfolgen.

Durch die Auftragszuweisungsstrategie kann nach Abziehen der Teilmengen eines fertig kommissionierten Auftrags von dem Kommissionierrechner aus einem nach Prioritäten geordneten Kundenauftragsstapel von den dringendsten Kundenaufträgen der Kundenauftrag ausgewählt werden, dessen Positionen (Zeilen) keine Kommissionierzone betreffen, in der weniger als X der Zwischenspeicherbehälter frei sind. Der Anteil X, der z.B. 20 % betragen kann, ist ein Strategieparameter, mit dem sich eine angestrebte Auslastung bei minimaler Behälterzahl erreichen lässt.

Durch die Belegungsstrategie wird erreicht, dass sich in einer Kommissionierzone nur selten mehr Zonenaufträge ansammeln als Zwischenspeicherbehälter verfügbar sind. Sollte dies doch der Fall sein, so kann durch die Zonenzuweisungsstrategie zunächst versucht werden, eine gleichmäßigere Auslastung zu erreichen. Für den seltenen Fall, dass auch dies nicht reicht, sorgt die Auftragszuweisungsstrategie dafür, dass die Kommissionierer in den überlasteten Kommissionierzonen ohne Wartezeit weiterarbeiten können.

Durch die Gesamtstrategie wird ein besonders effizientes Kommissionierverfahren bzw. Kommissioniersystem geschaffen, dass herkömmlichen Systemen weit überlegen ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Draufsicht auf eine Kommissioniervorrichtung gemäß einer ersten Ausführungsform der vorliegenden Erfindung, und zwar gemäß dem ersten Aspekt der Erfindung;

Fig. 2    eine schematische Seitenansicht der Kommissioniervorrichtung der Fig. 1;

Fig. 3    eine der Fig. 1 vergleichbare Ansicht der Kommissioniervorrichtung, wobei Grenzen zwischen benachbarten Kommissionierzonen verschoben sind;

Fig. 4    eine schematische Darstellung eines Kommissioniersystems zur Erläuterung des Kommissionierverfahrens gemäß dem ersten Aspekt der Erfindung;

Fig. 5    eine der Fig. 4 vergleichbare Ansicht, bei einer Verringerung der Kommissionierzonen um die Hälfte;

Fig. 6    eine der Fig. 4 vergleichbare Ansicht, wobei die Anzahl der Kommissionierzonen gleich geblieben ist, sich jedoch die Größe der Kommissionierzonen verändert hat;

Fig. 7    eine schematische Darstellung einer Strategiekaskade gemäß einer Ausführungsform des Kommissionierverfahrens gemäß dem ersten Aspekt der Erfindung;

Fig. 8    eine schematische Seitenansicht einer weiteren Ausführungsform der Kommissioniervorrichtung gemäß dem ersten Aspekt der Erfindung;

Fig. 9    eine schematische Draufsicht auf eine Kommissioniervorrichtung gemäß dem zweiten Aspekt der Erfindung;

Fig. 10    eine Frontalansicht der Kommissioniervorrichtung der Fig. 9;

Fig. 11    eine Querschnittsansicht der Kommissioniervorrichtung der Fig. 9; und

Fig. 12    eine schematische Darstellung einer dynamischen Kommissionierzonenbildung gemäß dem zweiten Aspekt der Erfindung.

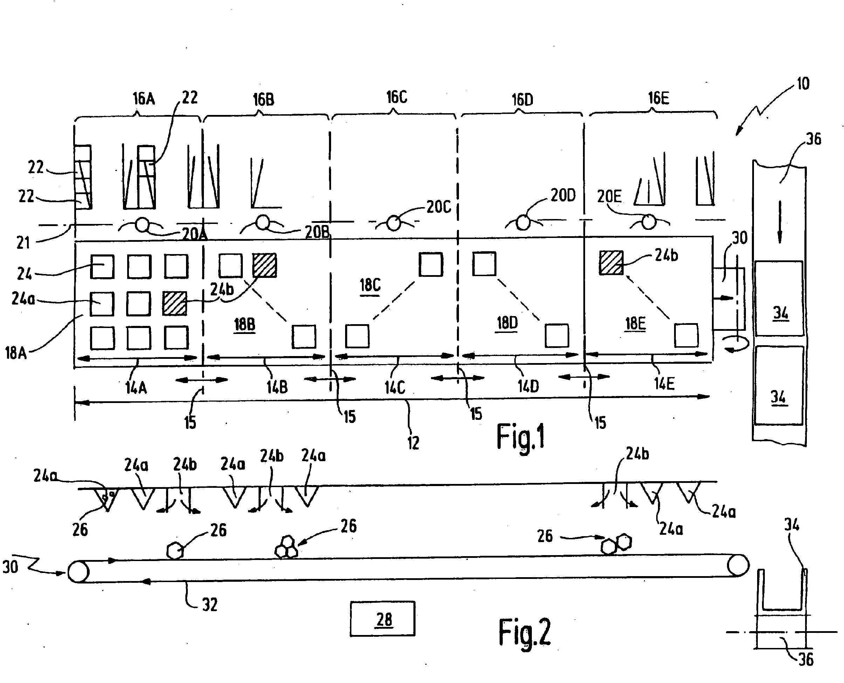

In den Fig. 1 und 2 ist eine erste Ausführungsform einer erfindungsgemäßen Kommissioniervorrichtung generell mit 10 bezeichnet.

Die Kommissioniervorrichtung 10 weist einen Kommissionierbereich 12 auf, in dem eine teilautomatisierte Kommissionierung stattfindet.

Der Kommissionierbereich 12 ist in einer Mehrzahl von Kommissionierzonen 14 unterteilt, bei der vorliegenden Ausführungsform fünf Kommissionierzonen 14A-14E. Die Kommissionierzonen 14A-14E sind voneinander durch Grenzen 15 abgegrenzt.

Jede Kommissionierzone 14 weist einen Bereitstellungsabschnitt 16 auf, in dem zu kommissionierende Artikel bereitgestellt werden.

Ferner weist jede Kommissionierzone 14 einen Auftragsablageabschnitt 18 auf, an dem ein Auftrag, der aus einer Mehrzahl von kommissionierten Artikeln zusammengestellt ist, zur weiteren Bearbeitung abgelegt wird.

Jeder Kommissionierzone 14A-14E ist ein einzelner Kommissionierer 20A-20E zugeordnet. Die Kommissioniervorrichtung 10 sieht nicht vor, dass ein Kommissionierer 20 während seiner Kommissioniertätigkeit die Grenze 15 zu einer benachbarten Kommissionierzone 14 überschreitet, falls der benachbarte Kommissionierer beispielsweise überlastet ist. Hierdurch wird vermieden, dass zwei oder mehr Kommissionierer sich in einer Kommissionierzone 14 befinden, was zweifellos zu wechselseitigen Behinderungen, Konflikten und letztendlich zu einem Anstieg der Fehlerrate führen würde. Stattdessen erhält jeder Kommissionierer 20 ausschließlich Aufträge (sogenannte Zonenaufträge), die das Holen von einem oder mehreren Artikeln aus dem Bereitstellungsabschnitt 16 seiner Kommissionierzone 14 sowie das Ablegen des Artikels bzw. der Artikel des Zonenauftrages an dem Auftragsablageabschnitt 18 seiner Kommissionierzone 14 beinhaltet.

Es ist in diesem Zusammenhang anzumerken, dass die Darstellung der Fig. 1 von den Größenverhältnissen her verzerrt ist, um eine bessere Übersichtlichkeit zu erhalten. Zwar ist die relative Größe von Kommissionierer 20 und Bereitstellungsabschnitt 16 etwa in der richtigen Relation zueinander dargestellt. Der Auftragsablageabschnitt 18 ist jedoch deutlich vergrößert dargestellt, um die erfindungsgemäße Kommissioniervorrichtung besser erläutern zu können.

Die Kommissionierer 20 sind in ihren Kommissionierzonen 16 jeweils an einem Ablagearbeitsplatz gezeigt, also vor dem Auftragsablageabschnitt 18 stehend. Dabei bilden die Kommissionierer 20 eine Achse 21. Es versteht sich, dass diese Achse im Regelfall geradlinig verläuft. Es ist jedoch auch durchaus denkbar, andere topographische Strukturen, wie gekrümmte oder Ringstrukturen vorzusehen.

In jedem Bereitstellungsabschnitt 16 ist in der Regel eine Mehrzahl von Bereitstellplätzen 22 vorgesehen, in denen jeweils Artikel zum Kommissionieren bereitgestellt sind. In jedem Bereitstellungsabschnitt 16 ist folglich ein Artikelsortiment vorhanden, aus dem der Kommissionierer 20 Zonenaufträge zusammenstellen kann.

Die Artikelsortimente der Kommissionierzonen 14 können im einfachsten Fall identisch sein. In der Regel sind die Artikelsortimente der Kommissionierzonen jedoch unterschiedlich und setzen sich zu einem Gesamtsortiment zusammen.

Kundenaufträge können sich aus Artikeln aus dem Gesamtsortiment zusammensetzen.

Dabei kann es durchaus sein, dass manche Artikel nicht nur in einer Kommissionierzone 14 verfügbar sind, sondern in mehreren. Hierbei wird es sich in der Regel um sogenannte "Schnellläufer" handeln. Langsamläufer hingegen sind in der Regel nur in einer der Kommissionierzonen 14 vorhanden.

Jeder Auftragsablageabschnitt 18 weist eine Mehrzahl (im vorliegenden Fall neun) Zwischenspeicherbehälter 24 auf. In den Zwischenspeicherbehältern 24 können jeweils ein oder mehrere Artikel 26 aus dem jeweiligen Artikelsortiment der Kommissionierzone 14 zwischengespeichert werden. In der Regel sind die Zwischenspeicherbehälter 24 dazu ausgelegt, die Artikel eines gesamten Zonenauftrags von Artikeln aus dem Artikelsortiment aufzunehmen.

In Fig. 2 ist dargestellt, dass die Zwischenspeicherbehälter 24 nach unten hin geöffnet werden können. Geschlossene Zwischenspeicherbehälter sind mit 24a bezeichnet. Ein nach unten oder mit Rutsch nach unten oder mit Übergabeband seitlich geöffneter Zwischenspeicherbehälter ist mit 24b bezeichnet.

Unterhalb der Zwischenspeicherbehälter 24 der Auftragsablageabschnitte 18A-18E ist ein Bereichsförderer 30 angeordnet. Die Zwischenspeicherbehälter 24 sind in Bezug auf den Bereichsförderer 30 so angeordnet, dass die Artikel 26 aus einem geöffneten Zwischenspeicherbehälter 24 auf dem Bereichsförderer 30 abgelegt werden.

Der Bereichsförderer 30 weist im vorliegenden Fall ein Förderband 32 auf. Die Förderrichtung des Förderbandes 32 ist in Fig. 2 durch Pfeile dargestellt (in der Zeichnungsdarstellung der Fig. 2 nach rechts). Auf dieser Seite des Bereichsförderers 30 ist ein Auftragsbehälter 34 angeordnet. Der Auftragsbehälter 34 kann bei der vorliegenden Ausführungsform mittels eines Auftragsbehälterförderers 36 (beispielsweise ebenfalls in Form eines Förderbandes) nach Erhalt eines Kundenauftrages aus dem Kommissionierbereich 12 weitertransportiert werden, entweder zum Versand oder zur Fertigkommissionierung in weiteren Kommissionierbereichen oder aus sogenannten Kommissionierautomaten.

Der Bereichsförderer 30 ist quer zu dem Auftragsbehälterförderer 36 angeordnet.

Hieraus ergibt sich, dass entlang der Achse des Auftragsbehälterförderers 36 noch weitere Kommissionierbereiche 12 vorgesehen sein können und/oder Kommissionierautomaten oder andere Typen von Kommissioniervorrichtungen bzw. -systemen.

Mit anderen Worten wird in dem Kommissionierbereich 12 der Kommissioniervorrichtung 20 ein Kundenauftrag oder nur ein Teil eines Kundenauftrages kommissioniert, aufgeteilt in Zonenaufträge.

Wie bereits erläutert, erfolgt die Kommissionierung teilautomatisiert. Zu diesem Zweck ist ein Kommissionierrechner 28 vorgesehen.

Der Kommissionierrechner 28 steht zum einen mit den Kommissionierern 20A-20E in Verbindung. Dies kann beispielsweise dadurch erfolgen, dass an den Bereitstellplätzen 22 Signalvorrichtungen wie Lampen, Anzeigen oder ähnliches vorgesehen sind. Auch können bei den Zwischenspeicherbehältern 24 geeignete Anzeigen vorgesehen sein, um den Kommissionierer 20 zu unterstützen.

Als weitere Option ist es möglich, dass jeder Kommissionierer 20 Anweisungen über ein Terminal, beispielsweise ein Monitor im Bereich der Kommissionierzone erhält. Das Terminal kann beispielsweise auch ein Funkterminal sein, das nach der Art einer Armbanduhr um den Arm getragen wird und auf dem die Weisungen zum Führen des Kommissionierers erscheinen. Auch eine andere Drahtlosverbindung ist denkbar.

Ferner ist auch eine sprachgesteuerte Kommunikation möglich. Es kann im einfachsten Fall ein Lautsprecher sein, der in allen Kommissionierzonen vorgesehen ist und Anweisungen gibt, wie die "Kommissionierer A zu Bereitstellungsplatz 22-1" oder Ähnliches. Es ist jedoch auch möglich, entsprechende Weisungen beispielsweise über Funk und eine Kopfhörergarnitur zu übermitteln, und zwar spezifisch für jeden Kommissionierer.

Der Kommissionierrechner 28 steuert ferner das Öffnen und Schließen der einzelnen Zwischenspeicherbehälter. Ferner steuert der Kommissionierrechner 28 den Bereichsförderer 30.

In der Darstellung der Fig. 2 ist ein Kundenauftrag in dem Kommissionierbereich 12 abgeschlossen worden. Das heißt, dass sämtliche Kommissionierer 20, deren Kommissionierzonen 14 bei der Zusammenstellung des Kundenauftrages involviert waren, den jeweiligen Zonenauftrag abgearbeitet und quittiert haben. Entsprechende Quittiertasten können an den Auftragsablageabschnitten bzw. unmittelbar an den Zwischenspeicherbehältern 24 vorgesehen sein.

Sobald alle involvierten Kommissionierer 20 quittiert haben, wird ein Auftragsbehälter 34, der auf dem Auftragsbehälterförderer 36 bereitsteht, für den kommissionierten Kundenauftrag zugewiesen. Der Kommissionierrechner 28 öffnet dann die Zwischenspeicherbehälter 24, in die die Kommissionierer 20 die jeweiligen Zonenaufträge hineinkommissioniert haben (angewiesen durch den Kommissionierrechner 28).

Die in den geöffneten Zwischenspeicherbehältern 24b enthaltenen Artikel 26 gelangen auf den Bereichsförderer 30. Dieser wird von dem Kommissionierrechner 28 angesteuert, so dass die darauf enthaltenen Artikel 26 in einem virtuellen oder mechanisch abgegrenztem Bandabschnitt, oder auch mit einem unter den Zwischenbehältern laufenden Sorter in den Auftragsbehälter 34 überführt werden. Damit ist der Kundenauftrag für den dargestellten Kommissionierbereich 12 abgeschlossen.

Durch die Mehrzahl von Zwischenspeicherbehältern 24 pro Auftragsablageabschnitt 18 kann ein Kommissionierer 20 mehrere Zonenaufträge gleichzeitig bearbeiten. Hierdurch können die Wege deutlich verkürzt werden. Ferner kann ein Zwischenspeicherbehälter 24 nach Fertigstellung des Zonenauftrages noch solange belegt bleiben, trotz Quittierung durch den jeweiligen Kommissionierer, bis die anderen Zonenaufträge, die zu dem angesprochenen Kundenauftrag gehören, ebenfalls quittiert haben.

Im Betrieb erhält der Kommissionierrechner 28 demzufolge Kundenaufträge für den Kommissionierbereich 12 oder weist den Teil eines Kundenauftrages dem Kommissionierbereich 12 zu. Der Kundenauftrag (bzw. der Teil hiervon) wird dann in Abhängigkeit von den gewünschten Artikeln 26 in Zonenaufträge für die einzelnen Kommissionierzonen 14 aufgeteilt.

Die Zonenaufträge werden dann an die Kommissionierer 20 übermittelt und die Kommissionierer arbeiten die Zonenaufträge ab.

Dabei kann es sein, dass ein involvierter Kommissionierer beispielsweise nur einen Artikel zu einem Zonenauftrag holen muss. Es kann auch sein, dass ein anderer Kommissionierer aufgrund seines Artikelsortimentes bei einem gegebenen Kundenauftrag, mehrere Artikel zur Kommissionierung "seines" Zonenauftrages heranholen muss. Ferner ist es möglich, dass ein Kommissionierer nicht so leistungsstark ist wie ein anderer. Zudem variiert die Gängigkeit der Artikel des Gesamtsortimentes mit der Zeit.

Es kommen auch neue Artikel hinzu. Andere werden aus dem Gesamtsortiment gestrichen. Zudem gibt es beispielsweise im Verlauf eines Tages häufig Phasen, in denen sehr viele Kundenaufträge kurzfristig abgearbeitet werden müssen. Während anderer Phasen ist die Kommissioniervorrichtung eher unterfordert. Auch kann es sein, dass Kommissionierer eine Pause machen, krank sind oder aus einem sonstigen Grund ausfallen.

Um wenigstens einer dieser und weitere Kommissioniereinflussfaktoren zu berücksichtigen, beinhaltet das erfindungsgemäße Kommissionierverfahren eine Zonenzuweisungsstrategie.

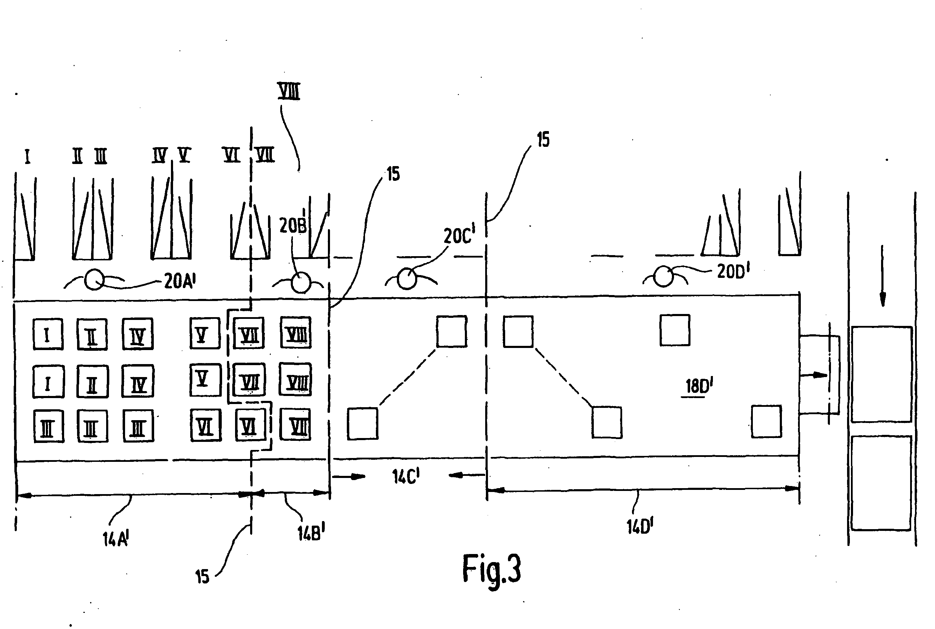

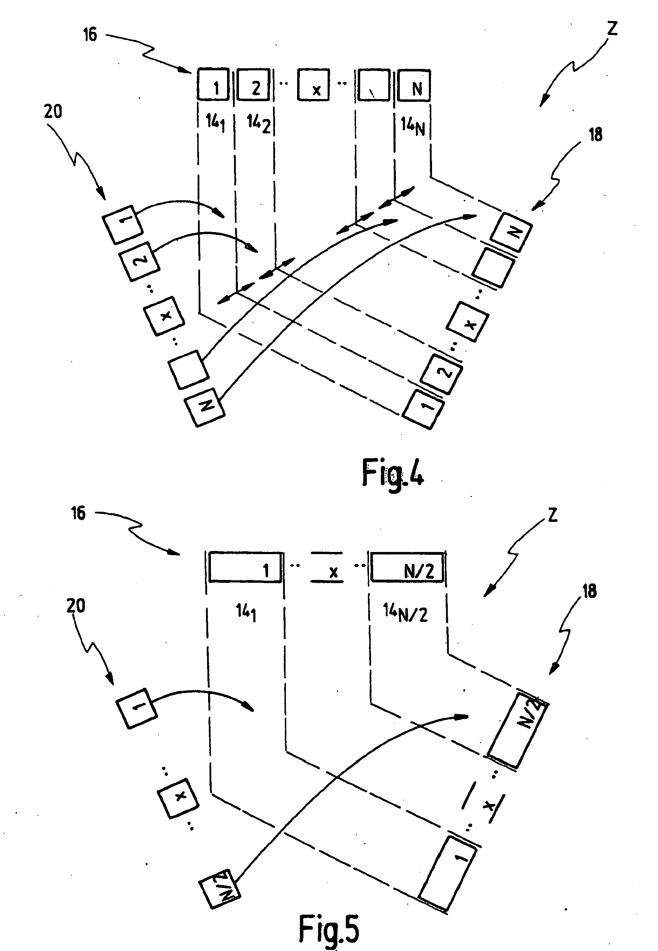

Diese ist in Fig. 3 anhand des Beispiels der Kommissioniervorrichtung der Fig. 1 und 2 sowie in den Fig. 4 bis 6 schematisch dargestellt.

Die zonenzuweisungsstrategie ist generell mit Z bezeichnet und ermöglicht es, die Grenzen 15 zwischen benachbarten Kommissionierzonen 14 variabel einzustellen, um die Größe der Kommissionierzonen 14 und/oder die Anzahl der Kommissionierzonen 14 an die variablen Kommissioniereinflussfaktoren anzupassen.

Im Beispiel der Fig. 3 ist einer der Kommissionierer 20D, 20E der Fig. 1 und 2 nicht anwesend. Der andere Kommissionierer, in Fig. 3 20D' bezeichnet, ist nun einer neuen Kommissionierzone 14D' zugeordnet, die die Kommissionierzonen 14D und 14E der Fig. 1 beinhaltet. Der Kommissionierer 20D' erhält dabei Zonenaufträge, die das Holen von Artikeln aus dem Artikelsortiment der nun deutlich größeren Kommissionierzone 14D' beinhalten und legt die kommissionierten Artikel in einem nunmehr deutlich vergrößerten Auftragsablageabschnitt 18D' mit insgesamt achtzehn Zwischenspeicherbehältern 24 ab.

Die Kommissionierzone 14C' ist identisch zu der Kommissionierzone 14C der Fig. 1 und 2.

Alternativ hätte man den Kommissionierern 20C' und 20D' auch jeweils die Hälfte der Kommissionierzone 14D der Fig. 1 zuschlagen können.

In Fig. 3 ist ferner gezeigt, dass die Kommissionierzone 20A sich zur Kommissionierzone 20A' vergrößert hat, wohingegen die Kommissionierzone 20B' entsprechend kleiner geworden ist.

Die Grenze 15 zwischen diesen beiden Kommissionierzonen hat sich demzufolge verschoben.

Um einen weitgehend konfliktfreien Kommissionierablauf zu ermöglichen, erfolgt diese Verschiebung bei der Kommissioniervorrichtung 10 folgendermaßen.

Die Bereitstellungsabschnitte 16 sind in Teilabschnitte I bis VIII etc. unterteilt. Bei der Zonenaufteilung der Fig. 1 waren der Zone 14A Teilabschnitte I bis IV zugeordnet, der Zone 14B Teilabschnitte V bis VIII.

Aufgrund der Verschiebung der Grenze 15 beinhaltet die Zone 14A' nunmehr die Teilabschnitte I bis VI. Die Zone 14B' beinhaltet lediglich noch die Teilabschnitte VII, VIII.

Auch die Grenze zwischen den Auftragsablageabschnitten 18A', 18B' hat sich verschoben, wie es in Fig. 3 deutlich dargestellt ist.

Um dies näher zu verdeutlichen, ist den einzelnen Zwischenspeicherbehälter 24 der Zonen 14A', 14B' jeweils ein Teil der Bereitstellungsabschnitte 16A', 16B' zugeordnet worden. Man erkennt hieraus, dass trotz der ungünstigen Anordnung von neun Zwischenspeicherbehältern 24 (in der Praxis würde sicherlich eine gerade Anzahl gewählt werden) eine Trennung der Kommissionierzonen 14A', 14B' möglich ist, derart, dass sich die Kommissionierer 20A', 20B' nicht gegenseitig behindern.

In den Fig. 4 bis 6 ist schematisch einer derartige Zonenzuweisungsstrategie Z dargestellt.

In einer ersten Konstellation sind N Bereitstellungsabschnitte 16 und N Auftragsablageabschnitte 18 vorgesehen, somit N Kommissionierzonen 14.

Ferner sind N Kommissionierer 20 vorgesehen, jeweils ein Kommissionierer 20 für eine Kommissionierzone 14.

In Fig. 5 ist die Anzahl der Zonen auf N/2 reduziert worden. Demzufolge sind die Bereitstellungsabschnitte 16 und 18 jeweils doppelt so groß. Ferner ist nur die halbe Anzahl Kommissionierer 20 (N/2 Kommissionierer) vorgesehen. Durch Verschieben der Grenzen 15 ist es folglich möglich, die Anzahl der Kommissionierzonen 14 zu variieren. In Fig. 5 ist eine Halbierung der Anzahl der Kommissionierzonen gezeigt. Es ist jedoch auch jeder andere Bruchteil möglich. Ferner ist es nicht notwendig, dass die Kommissionierzonen 14 jeweils gleich groß sind.

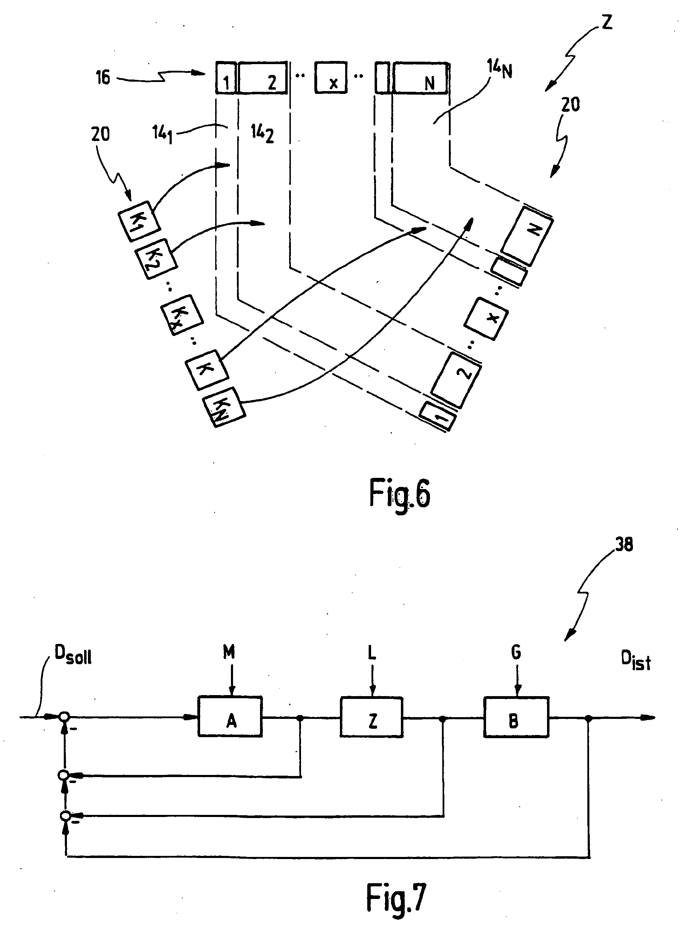

Dies ist in Fig. 6 dargestellt. In Fig. 6 ist die Anzahl der Kommissionierzonen gleich der Anzahl der Kommissionierzonen in Fig. 4, nämlich N Kommissionierzonen. Die Größenverhältnisse der Kommissionierzonen haben sich jedoch geändert. Beispielsweise ist die Kommissionierzone $14_1$ kleiner, wohingegen die Kommissionierzone $14_2$ größer ist. Entsprechend ist die Kommissionierzone $14_N$ größer, und die benachbarte Kommissionierzone $14_{N-1}$ ist entsprechend kleiner.

Somit wird durch Verschieben der Grenzen 15 zwischen Kommissionierzonen die Größe dieser Zonen 14 variabel eingestellt.

In allen Fällen ist jedoch jeweils nur ein Kommissionierer 20 in einer Kommissionierzone 14 tätig.

Fig. 7 zeigt in schematischer Form eine Strategiekaskade 38, die in dem Kommissionierrechner 28 implementiert sein kann.

Die unter Bezugnahme auf die Fig. 4 bis 6 beschriebene Zonenzuweisungsstrategie Z ist Teil der Gesamtstrategie.

Oberstes Ziel der Kommissioniervorrichtung 10 ist ein hoher Durchsatz D.

Die Strategiekaskade 38 ist nach der Art eines mehrschleifigen Regelkreises dargestellt. Der Solldurchsatz ist mit $D_{soll}$ bezeichnet, der Istdurchsatz mit $D_{ist}$ .

In einer innersten "Regelschleife" wird die Auftragszuweisung beeinflusst. Dies kann beispielsweise so erfolgen, dass in dem Kommissionierrechner 28 eine Auftragszuweisungsstrategie A implementiert ist, die solche Kundenaufträge priorisiert, deren Zonenaufträge solche Kommissionierzonen 14 betreffen, deren Auftragsablageabschnitte 18 unterdurchschnittlich besetzt sind.

Bei der Kommissioniervorrichtung 10 wird ein Kundenauftrag dann in Zonenaufträge aufgeteilt und an die Kommissionierer 20 vergeben, wenn gewährleistet ist, dass in jeder der angesprochenen Zonen ein freier Zwischenspeicherbehälter 24 zur Abarbeitung des Zonenauftrages frei ist. Hierdurch soll vermieden werden, dass Kommissionierzonen durch Kundenaufträge angesprochen werden, die ohnehin bereits ganz oder weitgehend blockiert sind, indem ihre Zwischenspeicherbehälter ganz oder nahezu vollständig durch bereits erteilte Zonenaufträge besetzt sind.

Ferner wird in der Strategiekaskade 38 die Zonenzuweisung durch eine Zonenzuweisungsstrategie Z in dem Kommissionierrechner 28 realisiert. Die Auftragszuweisungsstrategie A ist dabei der Zonenzuweisungsstrategie Z untergeordnet, und zwar in dem Sinne, dass die Auftragzuweisungsstrategie A vergleichsweise schnell auf Veränderungen in dem Zonenauftragsbestand der Kommissionierzonen reagieren kann. Die Zonenzuweisungsstrategie Z wird angewandt, wenn sich über einen mittleren Zeitraum ein Ungleichgewicht zwischen Kommissionierzonen einstellt oder die Anzahl der Kommissionierer sich aufgrund eines Ausfalles oder ähnliches verringert. Natürlich wird die Zonenzuweisungsstrategie Z auch dann aktiv, wenn aufgrund einer generell geringeren Auslastung weniger Kommissionierer eingesetzt werden.

Die Zonenzuweisungsstrategie Z ist dabei einer Belegungsstrategie B zum Belegen der Bereitstellungsabschnitte 16 mit Artikeln untergeordnet.

Die Strategie B hängt von der Gängigkeit G der Artikel des Gesamtsortimentes ab. In größeren zeitlichen Abständen, wie z.B. Tagen oder Wochen, wird diese Gängigkeit der Artikel neu bewertet und die Artikelsortimente der einzelnen Kommissionierzonen 14 werden in Abhängigkeit hiervon so zusammengestellt, dass die Kommissionierer 20 im Wesentlichen gleichmäßig ausgelastet werden.

Die Gängigkeit G ist in der Strategiestruktur 38 als "Störgröße" für die Belegungsstrategie B dargestellt. In ähnlicher Weise stellt L eine Störgröße in Form einer Kommissioniererleistung bzw. der Anzahl der Kommissionierer 20 dar. Für die Auftragszuweisungsstrategie A ist eine "Störgröße" M in Form des momentanen Bedarfes dargestellt.

Durch eine Überlagerung der drei genannten Strategien A, Z und B lässt sich für eine gegebene Kommissioniervorrichtung C ein hoher Durchsatz D erreichen.

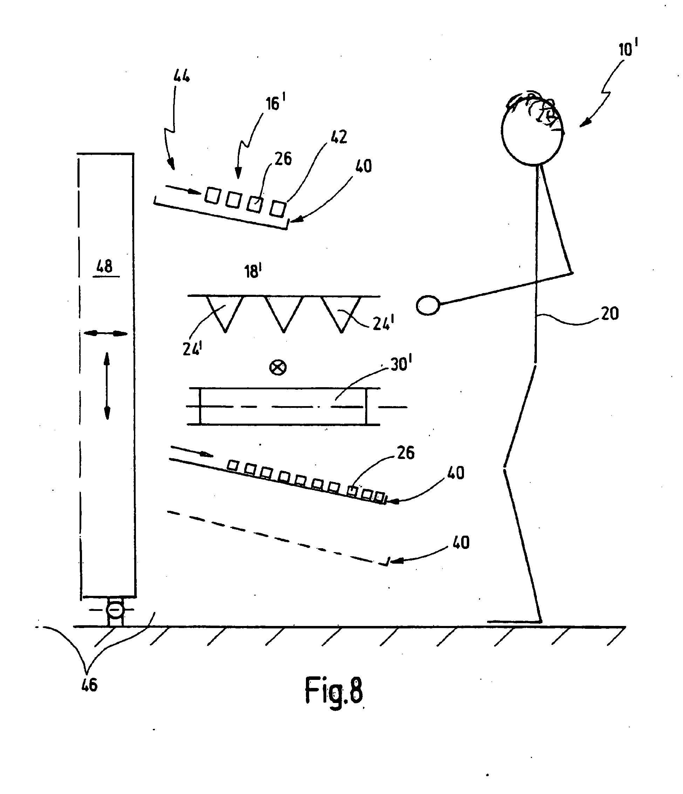

Fig. 8 zeigt eine alternative Ausführungsform einer Kommissioniervorrichtung 10' gemäß der vorliegenden Erfindung.

Die Kommissioniervorrichtung 10' entspricht hinsichtlich Aufbau und Funktion generell der Kommissioniervorrichtung 10 der Fig. 1 bis 3. Gleiche Elemente sind daher durch gleiche Bezugsziffern angegeben. Im Folgenden wird lediglich auf die Unterschiede eingegangen.

Während bei der Kommissioniervorrichtung 10 der Fig. 1 bis 3 die Bereitstellungsabschnitte 16 als Fachbodenregale oder ähnliches dargestellt sind, die räumlich von den jeweiligen Auftragsablageabschnitten 18 beabstandet sind, beinhaltet bei der Kommissioniervorrichtung 10 ein Bereitstellungsabschnitt 16 eine Mehrzahl von Durchlaufkanälen 40. Die Durchlaufkanäle 40 weisen jeweils ein Bereitstell-Ende 42 auf, das im Ablagearbeitsbereich des Kommissionierers 20 angeordnet ist. Ein entgegengesetztes Einlager-Ende 44 der Durchlaufkanäle 40 endet jeweils im Bereich einer Einlagergasse 46. In der Einlagergasse 46 können Einlagerpersonen die Durchlaufkanäle 40 nach Bedarf füllen, und zwar aus einem in der Regel deutlich größeren Lager.

Es ist jedoch auch möglich, dass innerhalb der Einlagergasse 46 ein Regalbediengerät 48 verfahrbar ist, das Artikel 26 automatisiert in den Bereitstellungsabschnitt 16 bzw. die nebeneinander angeordneten Bereitstellungsabschnitte 16 einlagert.

Bei der Kommissioniervorrichtung 10' kann der Kommissionierer im Wesentlichen stationär arbeiten. Es kann jedoch vorgesehen sein, dass beispielsweise der Bereitstellungsabschnitt 16' breiter ist als ein zugeordneter Auftragsablageabschnitt 18'. Jedenfalls wird sich der Kommissionierer 20 bei der Kommissioniervorrichtung 10 im Wesentlichen vor der Anordnung aus dem Bereitstellungsabschnitt 16 und dem Auftragsablageabschnitt 18 bewegen und muss insbesondere keine Wege in ein separates Bereitstelllager vollziehen.

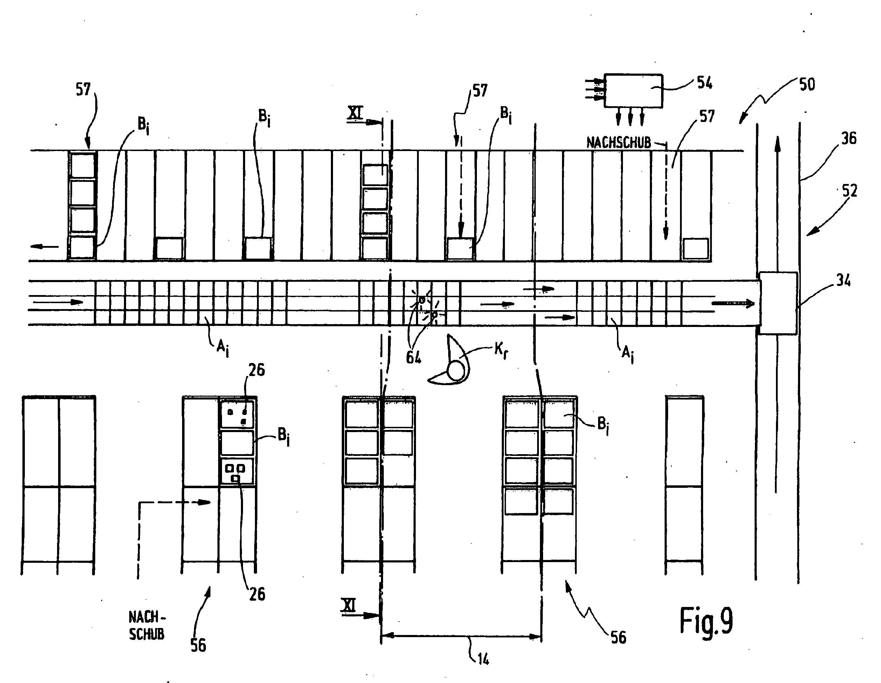

In den Figuren 9 bis 12 sind eine Kommissioniervorrichtung und ein entsprechendes Verfahren gemäß dem zweiten Aspekt der Erfindung dargestellt.

Die Kommissioniervorrichtung 50 weist auf:

1. eine Anzahl $N_B$ von Bereitstelleinheiten 22 bzw. $B_i$, i = 1, 2 .. $N_B$, die von der Breite des Artikelsortiments, d.h. der Gesamtanzahl der Artikel 26 bestimmt wird,

2. eine Anzahl $N_A$ von Auftragsablagen 34 bzw. $A_i$, i = 1 .. $N_A$, die vom maximalen Durchsatz und der Anzahl gleichzeitig zu bearbeitender Aufträge abhängt,

3. den Kommissionierer 20 bwz. $K_r$, r = 1, 2 .. $N_x$, die in $N_k$ parallelen *Kommissionierzonen* arbeiten und deren Anzahl $N_k$ vom aktuell benötigten *Durchsatz*, von der Pickleistung der einzelnen Kommissionierer und von den *Betriebsstrategien* abhängt,

4. eine Förderanlage 52, von der die Pickeinheiten aus den Kommissionierzonen abgefördert und zusammen mit den Pickeinheiten aus anderen Bereichen zu Packplätzen oder zum Versand gefördert werden,

5. die Systemsteuerung 54, die nach bestimmten Betriebsstrategien den Kommissionierprozess auslöst, steuert und kontrolliert und das Zusammenwirken der Systemkomponenten zielgemäß koordiniert und optimiert.

Die Artikeleinheiten bzw. Artikel 26 befinden sich z.B. lose oder in Behältern als Bereitstelleinheiten 22, $B_i$ auf Zugriffsplätzen, aus denen der Kommissionierer 20, $K_r$ auf Anweisung der Systemsteuerung die geforderte Pickmenge entnimmt. Die Zugriffs- oder Bereitstellplätze $B_i$ sind z.B. in Regalen 56 oder in Durchlaufkanälen 57 möglichst nahe den Auftragsablagen 34, $A_i$ griffgünstig angeordnet.

Die Auftragsablagen 34, $A_i$ sind vorzugsweise

bewegliche Ablagebehälter, die von der Förderanlage nacheinander den Kommissionierzonen zugeführt werden, oder nebeneinander angeordnete stationäre Abwurfschächte 58 in parallel arbeitenden Kommissionierzonen 14.

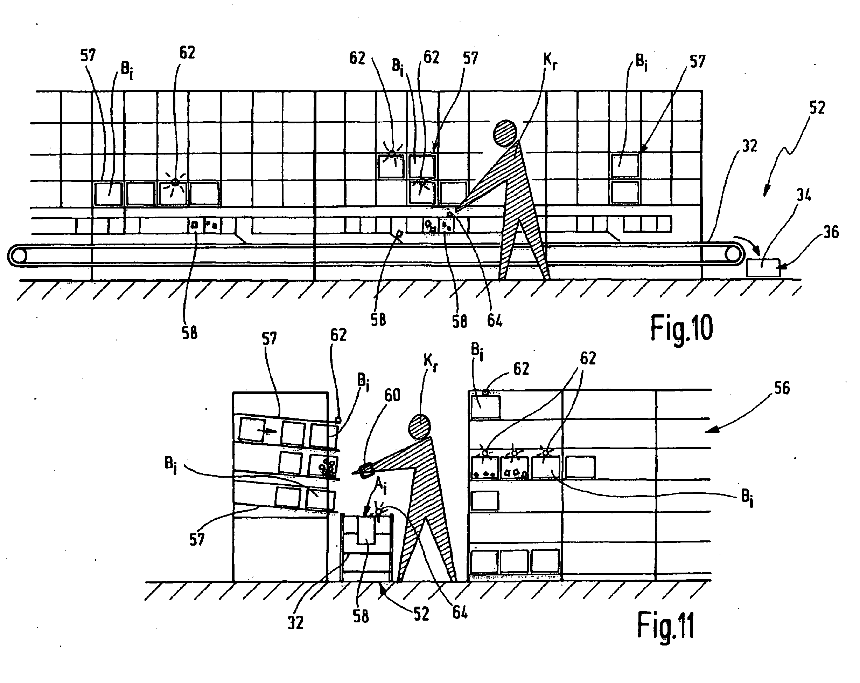

In die Abwurfschächte 58, $A_i$, deren Boden sich nach unten mechanisch öffnen lässt, werden die zu einem Auftrag gehörenden Pickeinheiten vom Kommissionierer $K_r$ abgelegt. Wenn in allen Kommissionierzonen 14 die zu einem Auftrag gehörenden Pickmengen in die zugeordneten Ablageschächte 58, $A_i$ abgelegt sind, werden diese auf den unterhalb verlaufenden Sammelförderer 32 entleert und abgefördert (s. Fig. 10) [6, 7, 8, 9].

Die aktuellen Entnahmeplätze und ggf. -mengen werden dem Kommissionierer $K_r$ durch die Systemsteuerung entweder über stationäre Leuchtanzeigen 62 angegeben, die an den Bereitstellplätzen 22, $B_1$ angebracht sind (s. Fig. 9, 10 oder 11), oder durch ein mobiles Terminal 60, das der Kommissionierer $K_r$ am Arm (Handheld Displays) oder auf einem Kommissionierwagen mit sich führt, der auch als Zwischenablage dient.

Der Ablagebehälter oder Ablageschacht 58, $A_i$ für den aktuell bearbeiteten Auftrag wird dem Kommissionierer $K_r$ z.B. durch eine Leuchtanzeige 64 am Ablageplatz $A_i$ oder ebenfalls über das mobile Terminal 60 angezeigt. An den stationären Anzeigen 62, 64 bzw. über das mobile Terminal 60 werden vom Kommissionierer $K_r$ auch die Entnahme und die Ablage quittiert. Die Angabe der Entnahmeorte, Entnahmemengen und Ablageplätze sowie das Quittieren sind auch per Beleg oder akustisch über einen Kopfhörer möglich (Pick by Voice).

Die beschriebenen technischen Ausführungsarten der Bereitstellung, der Auftragsablage, des Abförderns, der Anzeige und des Quittierens sind teilweise für sich bekannt und Stand der Kommissioniertechnik [2]. Neuartig ist die in Fig. 9 bis 12 dargestellte Kombination dieser materialfluss- und steuerungstechnischen Systemkomponenten mit dynamischen Betriebsstrategien, die in dieser Art und Anwendung nicht bekannt sind. In dem erfindungsgemäßen Kommissioniersystem werden die neuartigen Betriebstrategien realisiert durch die Systemsteuerung 54, die ein zentraler Kommissionsleitrechner oder ein Lagerverwaltungssystem (LVS) kombiniert mit dezentralen Prozesssteuerungen sein kann [2].

Kommissioniersysteme sind im Stand der Technik für einen geplanten Leistungsbedarf ausgelegt. Ausgerichtet auf den Spitzenbedarf sind sie in eine feste Anzahl von Kommissionierzonen aufgeteilt. Eine Kommissionierzone umfasst dabei jeweils eine bestimmte Anzahl von Bereitstellplätzen $B_i$ und Auftragsablagen $A_i$ und ist Arbeitsbereich von einem oder mehreren Kommissionierern.

Eine feste Anzahl von Kommissionierzonen mit jeweils einem Kommissionierer pro Zone hat zur Folge, dass die Kommissionierer nur bei der Planbelastung voll ausgelastet sind. In den übrigen Zeiten vermindern unproduktive Wartezeiten die Effizienz des Systems, während bei Überlastung keine Leistungssteigerung möglich ist. Das hat lange Auftragsdurchlaufzeiten zur Folge.

Wenn in einer Kommissionierzone gleichzeitig mehrere Kommissionierer tätig sein können, ist zwar eine höhere Gesamtleistung erreichbar. In Spitzenzeiten aber nimmt die gegenseitige Behinderung der Kommissionierer zu und damit deren Kommissionierleistung ab. Das gilt auch, wenn wie in [9] beschrieben ein nicht voll ausgelasteter Kommissionierer bei Überlastung einer Nachbarzone dort zeitweilig zur Entlastung eingesetzt wird.

Diese Nachteile werden vermieden mit den dynamischen Betriebsstrategien des Dynamic Order Picking System gemäß dem zweiten Aspekt der Erfindung, nachfolgend kurz DOP genannt. Mit einer dynamischen Kommissionierzoneneinteilung, einer dynamischen Bereitstellplatzbelegung und/oder einer dynamischen Auftragszuweisung wird jeweils wenigstens einer der folgenden Vorteile erreicht:

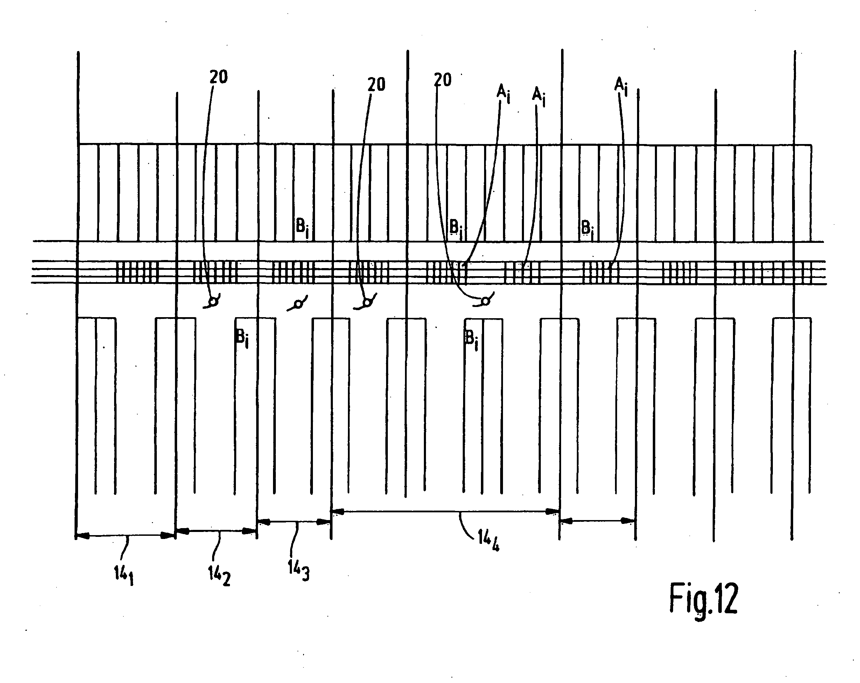

• Die Anzahl der Kommissionierzonen 14, in denen jeweils ein Kommissionierer 20, $K_r$ arbeitet, wird von der Systemsteuerung 54 selbstregelnd dem aktuellen Leistungsbedarf angepasst (s. Fig. 12). Das bewirkt kurze Auftragsdurchlaufzeiten auch in Spitzenzeiten.

• Die Kommissionierer 20, $K_r$ arbeiten jeder in einem gesonderten Bereich mit kürzesten Wegen ohne gegenseitige Behinderung mit gleichmäßiger und hoher Auslastung. Dadurch wird der Personalbedarf minimiert.

• Durch die Verantwortung für einen eindeutig zugewiesenen Kommissionierzone 14, die fehlende gegenseitige Behinderung und die reduzierte Verwechslungsgefahr sind eine minimale Fehlerquote und eine maximale Kommissionierqualität erreichbar.

In einer ihm zugewiesenen Kommissionierzone 14 des erfindungsgemäßen DOP arbeitet also jeweils ein Kommissionierer 20, $K_r$. Die Anzahl und Ausdehnung der Kommissionierzonen und damit die Anzahl der Kommissionierer sind vom aktuellen Leistungsbedarf abhängig (s. Fig. 12). Sie werden von der Systemsteuerung bestimmt durch die

• Dynamische Kommissionierzonenbildung: Jeweils so viele benachbarte Bereitstellplätze $B_i$ werden mit so vielen nebeneinander liegenden Ablagebehältern $A_i$ zu einer Kommissionierzone 14 zusammengefasst, dass die in den einzelnen Zonen anfallenden Teilaufträge einen Kommissionierer 20, $K_r$ voll auslasten.

Wenn der Leistungsbedarf soweit ansteigt, dass die Kommissionierer 20, $K_r$ für längere Zeit überlastet sind, wird die Anzahl der Kommissionierzonen um 1 erhöht und eine neue Zoneneinteilung durchgeführt. Bei einem anhaltenden Absinken des Leistungsbedarfs wird die Zonenanzahl um 1 vermindert und ebenfalls eine Neueinteilung durchgeführt.

Bei temporär ungleichmäßiger Belastung der Kommissionierzonen 14 wird die Grenze zwischen zwei benachbarten Zonen von der Systemsteuerung so verschoben, dass sich wieder eine gleichmäßige Auslastung ergibt.

Eine anhaltend gleichmäßige Arbeitsbelastung der Kommissionierzonen wird vorzugsweise erreicht durch die

• Dynamische Bereitstellplatzbelegung: Entsprechend der vom Rechner 54 überwachten Gängigkeit werden die einzelnen Artikel so über die Bereitstellplätze $B_i$ verteilt, dass der Durchsatz und der Arbeitsanfall in den einzelnen Kommissionierzonen 14 im Verlauf eines Tages nahezu gleich groß sind.

Wenn sich die Gängigkeit eines Artikels 26 so stark verändert, dass er die Durchsatzverteilung um mehr als z.B. $\pm$ 5% aus dem Gleichgewicht bringt, wird dessen Bereitstellplatz $B_i$ in einen anderen Bereich (Kommissionierzone) verlegt. Das geschieht ohne Umlagern nach der Entnahme der letzten Einheit des Artikelbestands am bisherigen Bereitstellplatz $B_i$.

Die dritte Betriebsstrategie des DOP ist darauf ausgerichtet, die Wartezeiten der Kommissionierer auf Aufträge zu minimieren. Das wird vorzugsweise erreicht durch die

• Dynamische Auftragszuweisung: Nach dem Auslauf aller Teilmengen eines fertig kommissionierten Auftrags wird von der Systemsteuerung 54 aus dem nach Priorität geordneten Auftragsstapel aufsteigend vom dringendsten Auftrag der erste Auftrag ausgewählt, dessen Positionen keine Kommissionierzone 14 betreffen, in der weniger als X % der ne 14 betreffen, in der weniger als X % der Ablagebehälter $A_i$ frei sind.

Der Anteil X, der z.B. im Bereich von 10 % bis 40 %, vorzugsweise 20 %, sein kann, ist ein Strategieparameter, mit dem sich bei minimaler Anzahl der Ablageplätze $A_i$ eine hohe Auslastung der Kommissionierer 20, $K_r$ erreichen lässt.

Die dynamische Kommissionierzoneneinteilung bewirkt, dass sich nicht mehr und nicht weniger Kommissionierer 20, $K_r$ im System befinden als aktuell benötigt. Zur Realisierung dieser Strategie erfasst oder berechnet die Systemsteuerung 54 die Pickleistung $\mu_\kappa$ [Pos/h] eines Kommissionierers 20, $K_r$ in Abhängigkeit von der Größe der Kommissionierzone 14. Der aktuelle Gesamtleistungsbedarf $\lambda_k$ [Pos/h], der sich aus dem laufenden Auftragseingang und dem Auftragsbestand errechnen lässt, geteilt durch das Leistungsvermögen pro Kommissionierer 20, $K_r$ ergibt die Anzahl der benötigten Kommissionierzonen 14 und Kommissionierer 20, $K_r$

nach der Beziehung:

$$N_K = \text{AUFRUNDEN} \ (\lambda_K/\mu_K).$$

Ist zum Beispiel der Gesamtleistungsbedarf $\lambda_k$ = 1.350 Positionen pro Stunde und die Pickleistung pro Kommissionierer $\mu_k$ = 250 Positionen pro Stunde, so ist die Anzahl der Kommissionierzonen $N_k$ = AUFRUNDEN (1.350/250) = 6.

Durch die dynamische Bereitstellplatzbelegung wird erreicht, dass sich in einer Kommissionierzone nur mit geringer Wahrscheinlichkeit mehr Aufträge ansammeln als Ablageplätze frei sind. Für den seltenen Fall, dass das doch geschieht, sorgt die dynamische Auftragsbelegung dafür, dass die Kommissionierer in den nicht überlasteten Bereichen ohne Wartezeit weiterarbeiten können.

Der erste und der zweite Aspekt der Erfindung entsprechen einander in vieler Hinsicht, auch wenn an mancher Stelle eine andere Terminologie gewählt wurde. Diese Aspekte sind daher als eine Erfindung zu verstehen.

**Literatur**

1. Gudehus, T. (1973); Grundlagen der Kommissioniertechnik, Einführung in die Dynamik der Warenverteil- und Lagersysteme, Girardet, Essen
2. Gudehus, T. (1999); Logistik, Grundlagen, Strategien, Anwendungen, Springer, Berlin-Heidelberg-New York
3. VDI-Richtlinie 3590 Kommissioniersysteme (1975); Blatt 1: Grundlagen; VDI-Verlag, Düsseldorf
4. VDI-Richtlinie 3590 Kommissioniersysteme (1976); Blatt 2: Aufbau- und Ablauforganisation; VDI-Verlag, Düsseldorf
5. VDI-Richtlinie 3590 Kommissioniersysteme (1977); Blatt 3: Entscheidungsfindung; VDI-Verlag, Düsseldorf
6. United States Patent Nr. 4,870,799 vom 3.10.1989, Installation for Making up Batches of Articles, Inventors J-M. Bergerioux et al.
7. Internationale Patententanmeldung, PCT, Veröffentlichungsnummer WO 96/36547, Prioritätsdatum 18.5.1995, Erfinder Natejka, Martin
8. SSI Schäfer Peem, Graz, (2004), Parallel Picking System (PPS), Interne Systembeschreibungen, Abbildungen aus Firmendruckschriften 9. EP 0 839 113 B1

**Patentansprüche**

**1.** Verfahren zum Kommissionieren von Artikeln (26) aus einer ersten Mehrzahl von Bereitstellungsabschnitten (16) in eine entsprechende Mehrzahl von Auftragsablageabschnitten (18) mittels einer zweiten Mehrzahl von Kommissionierern (20),

- wobei ein Bereitstellungsabschnitt (16), in dem ein bestimmtes Artikelsortiment bereitgestellt ist, und ein Auftragsablageabschnitt (18), an dem aus dem Artikelsortiment für einen Auftrag zusammengestellte Artikel (26) abgelegt werden, jeweils eine Kommissionierzone (14) bilden, so dass eine erste Mehrzahl von Kommissionierzonen (14) gebildet ist, die gemeinsam einen Kommissionierbereich bilden (12), und
- wobei ein Kommissionierrechner (28) für die Kommissionierzonen (14) jeweils Zonenaufträge erzeugt und diese den Kommissionierern (20) übermittelt,

**dadurch gekennzeichnet, dass**
in einer Kommissionierzone (14) jeweils nur ein Kommissionierer (20) kommissioniert, so dass die erste Mehrzahl von Kommissionierzonen (14) gleich der zweiten Mehrzahl von Kommissionierern (20) ist, und dass
der Kommissionierrechner (28) die Grenzen (15) zwischen benachbarten Kommissionierzonen (14) mittels einer Zonenzuweisungsstrategie (Z) variabel einstellt, um die Größe der Kommissionierzonen (14) in dem Kommissionierbereich (12) und/oder die Anzahl der Kommissionierzonen (14) in dem Kommissionierbereich (12) an variable Kommissioniereinflussfaktoren (L) anzupassen.

**2.** Kommissionierverfahren nach Anspruch 1, **dadurch gekennzeichnet, dass** die Kommissioniereinflussfaktoren (L) die Kommissionierleistung (L) der einzelnen Kommissionierer (20) beinhalten.

**3.** Kommissionierverfahren nach Anspruch 1 oder 2, **dadurch gekennzeichnet, dass** die Kommissioniereinflussfaktoren (L) die Anzahl der verfügbaren Kommissionierer beinhalten.

**4.** Kommissionierverfahren nach einem der Ansprüche 1 bis 3, **dadurch gekennzeichnet, dass** die Artikelsortimente der Kommissionierzonen (14) unterschiedlich sind und sich zu einem Gesamtsortiment ergänzen.

**5.** Kommissionierverfahren nach Anspruch 4, **dadurch gekennzeichnet, dass** die Kommissioniereinflussfaktoren (L) die Anzahl der Zonenaufträge pro Zeiteinheit beinhalten.

**6.** Kommissionierverfahren nach Anspruch 4 oder 5, **dadurch gekennzeichnet, dass** der Kommissionierrechner (28) Kundenaufträge erhält und in eine dritte Mehrzahl von Zonenaufträgen aufteilt und dass der Kommissionierrechner (28) durch eine Auftragszuweisungsstrategie (A) diejenigen Kundenaufträge priorisiert, deren Zonenaufträge solche Kommissionierzonen (14) betreffen, deren Auftragsablageabschnitte (18) unterdurchschnittlich ausgelastet sind.

7. Kommissionierverfahren nach Anspruch 6, **dadurch gekennzeichnet, dass** die Auftragszuweisungsstrategie (A) der Zonenzuweisungsstrategie (Z) nach der Art einer Kaskade (38) untergeordnet ist.

8. Kommissionierverfahren nach einem der Ansprüche 4 bis 7,
**dadurch gekennzeichnet, dass** der Kommissionierrechner (28) mittels einer Belegungsstrategie (B) die Gängigkeit (G) der Artikel (26) des Gesamtsortimentes bewertet und die Artikelsortimente der einzelnen Kommissionierzonen (14) in Abhängigkeit von dem Ergebnis dieser Bewertung so zusammenstellt, dass die Kommissionierer (20) im Wesentlichen gleichmäßig ausgelastet werden.

9. Kommissionierverfahren nach Anspruch 8, **dadurch gekennzeichnet, dass** der Kommissionierrechner (28) einen Artikel (26), dessen Gängigkeit (G) sich so verändert, dass die Auslastung des Kommissionierers (20), in dessen Kommissionierzone (14) der Artikel (26) fällt, sich gegenüber der mittleren Auslastung der Kommissionierer (20) um mehr als ein bestimmter Schwellenwert verändert, einer anderen Kommissionierzone (14) zuordnet.

10. Kommissionierverfahren nach Anspruch 8 oder 9, **dadurch gekennzeichnet, dass** die Zonenzuweisungsstrategie (Z) der Belegungsstrategie (B) nach der Art einer Kaskade (38) untergeordnet ist.

11. Kommissionierverfahren nach einem der Ansprüche 1 bis 10, **dadurch gekennzeichnet, dass** wenigstens ein Bereitstellungsabschnitt (16') einen Durchlaufkanal (40) aufweist, dessen vorderes Bereitstell-Ende (42) in einem Ablagearbeitsbereich des Kommissionierers angeordnet ist.

12. Kommissionierverfahren nach Anspruch 11, **dadurch gekennzeichnet, dass** in den Bereitstellungsabschnitten (16') eine vierte Mehrzahl von Durchlaufkanälen (40) vorgesehen ist, an deren hinterem Einlager-Ende (44) eine Einlagergasse (46) angeordnet ist.

13. Kommissionierverfahren nach Anspruch 12, **dadurch gekennzeichnet, dass** in der Einlagergasse (46) ein Regalbediengerät (48) von dem Kommissionierrechner (28) gesteuert verfahren wird, um wenigstens einen Teil der Artikel (26) des Gesamtsortimentes automatisiert einzulagern.

14. Kommissionierverfahren nach einem der Ansprüche 1 bis 13, **dadurch gekennzeichnet, dass** wenigstens ein Auftragsablageabschnitt (18) eine fünfte Mehrzahl von Zwischenspeicherbehältern (24) aufweist, die jeweils zur Aufnahme von wenigstens einem Artikel (26) aus dem Artikelsortiment ausgelegt sind.

15. Kommissionierverfahren nach Anspruch 14, **dadurch gekennzeichnet, dass** unter- oder oberhalb der Zwischenspeicherbehälter (24) ein Bereichsförderer (30) angeordnet ist.

16. Kommissionierverfahren nach Anspruch 15, **dadurch gekennzeichnet, dass** der Kommissionierrechner (28) Zwischenspeicherbehälter (24) auswählen und automatisiert nach unten öffnen kann, um die darin zwischengespeicherten Artikel (26) auf den Bereichsförderer (30) abzugeben.

17. Kommissionierverfahren nach Anspruch 15 oder 16, **dadurch gekennzeichnet, dass** der Bereichsförderer (30) ein Förderband (32) aufweist.

18. Kommissionierverfahren nach Anspruch 16 oder 17, **dadurch gekennzeichnet, dass** der Bereichsförderer (30) parallel zu einer Achse (21) ausgerichtet ist, die durch die Ablagearbeitsbereiche der Kommissionierer (20) in den Kommissionierzonen (14) gebildet ist.

19. Kommissionierverfahren nach einem der Ansprüche 15 bis 18, **dadurch gekennzeichnet, dass** der Kommissionierrechner (28) den Bereichsförderer (30) so ansteuert, dass die darauf abgelegten Artikel (26) zu einem Kundenauftrag oder einem Teil eines Kundenauftrages zusammengefasst werden.

20. Kommissionierverfahren nach Anspruch 19, **dadurch gekennzeichnet, dass** quer zu dem Bereichsförderer (30) ein Auftragsbehälterförderer (36) ausgerichtet ist und dass der Kommissionierrechner (28) den Bereichsförderer (30) und den Auftragsbehälterförderer (36) so ansteuert, dass die auf dem Bereichsförderer (30) abgelegten Artikel (26) in einen auf dem Auftragbehälterförderer (36) bereitstehenden Auftragsbehälter (34) übergeben werden.

21. Kommissioniervorrichtung, insbesondere zur Durchführung des Verfahrens nach einem der Ansprüche 1 bis 20, mit einer ersten Mehrzahl von Bereitstellungsabschnitten (16) und einer entsprechenden Mehrzahl von Auftragsablageabschnitten (18) zum Kommissionieren von Artikeln aus den Bereitstellungsabschnitten (16) und Ablegen von Artikeln (26) an den Auftragsablageabschnitten (18), mittels einer zweiten Mehrzahl von Kommissionierern (20),

- wobei ein Bereitstellungsabschnitt (16), in dem ein bestimmtes Artikelsortiment bereitgestellt ist, und ein Auftragsablageabschnitt (18), an dem aus dem Artikelsortiment zusammengestellte Aufträge abgelegt werden, jeweils eine Kommissionierzone (14) bilden, so dass eine erste Mehrzahl von Kommissionierzonen (14) gebildet ist, die gemeinsam einen Kommissionierbereich (12) bilden, und

- wobei ein Kommissionierrechner (28) für die Kommissionierzonen (14) jeweils Zonenaufträge erzeugt und diese den Kommissionierern (20) übermittelt,

**dadurch gekennzeichnet, dass**
in einer Kommissionierzone (14) jeweils nur ein Kommissionierer (20) angeordnet ist, so dass die erste Mehrzahl von Kommissionierzonen (14) gleich der zweiten Mehrzahl von Kommissionierern (20) ist, und dass

der Kommissionierrechner (28) dazu ausgelegt ist, die Grenzen (15) zwischen benachbarten Kommissionierzonen (14) mittels einer Zonenzuweisungsstrategie (Z) variabel einzustellen, um die Größe der Kommissionierzonen (14) in dem Kommissionierbereich (12) und/oder die Anzahl der Kommissionierzonen (14) in dem Kommissionierbereich (12) an variable Kommissioniereinflussfaktoren (L) anzupassen.

22. Verfahren zum Kommissionieren aus einem bereitgestellten Artikelsortiment nach vorgegebenen Aufträgen mit Hilfe eines Kommissioniersystems, aufweisend:

- eine Anzahl $N_B$ von Bereitstelleinheiten $B_i$, die von der Breite des Artikelsortiments, d.h. der Gesamtanzahl der Artikel bestimmt ist,
- eine Anzahl $N_A$ von Auftragsablagen $A_i$, die vom maximalen Durchsatz und der Anzahl gleichzeitig zu bearbeitender Aufträge abhängt,
- eine Anzahl $N_K$ von Kommissionierern, die in $N_k$ parallelen Kommissionierzonen arbeiten, deren Anzahl vom aktuell benötigten Durchsatz, von der Pickleistung der einzelnen Kommissionierer und von den Betriebsstrategien abhängt, und
- eine Förderanlage, von der die Pickeinheiten aus den Kommissionierzonen abgefördert und zusammen mit den Pickeinheiten aus anderen Bereichen zu Packplätzen oder zum Versand gefördert werden,
- wobei der Kommissionierprozess nach bestimmten Betriebsstrategien ausgelöst, gesteuert und kontrolliert wird und wobei das Zusammenwirken der Systemkomponenten zielgemäß koordiniert und optimiert wird,
**gekennzeichnet durch**
eine dynamische Kommissionierzonenbildung, bei der jeweils so viele benachbarte Bereitstellplätze mit so vielen nebeneinander liegenden Ablagebehältern zu einer Kommissionierzone zusammengefasst werden, dass die in den einzelnen Kommissionierzonen anfallenden Teilaufträge einen Kommissionierer voll auslasten.

23. Kommissionierverfahren nach Anspruch 22, **gekennzeichnet durch** eine dynamische Bereitstellplatzbelegung, nach der die einzelnen Artikel entsprechend der von der Systemsteuerung überwachten Gängigkeit so über die Bereitstellplätze verteilt werden, dass der Durchsatz und der Arbeitsanfall in den einzelnen Kommissionierzonen im Verlauf eines Tages nahezu gleich groß sind.

24. Kommissionierverfahren nach Anspruch 22 oder 23, **gekennzeichnet durch** eine dynamische Auftragszuweisungsstrategie, nach der nach dem Auslauf aller Teilmengen eines fertig kommissionierten Auftrags von der Systemsteuerung aus dem nach Priorität geordneten Auftragsstapel aufsteigend vom dringendsten Auftrag der erste Auftrag ausgewählt wird, dessen Positionen keine Kommissionierzone betreffen, in der weniger als ein bestimmter Prozentsatz X der Ablageplätze frei ist.

25. Kommissionierverfahren nach einem der Ansprüche 22 bis 24, **dadurch gekennzeichnet, dass** sich die Artikeleinheiten lose oder in Behältern als Bereitstelleinheiten auf Zugriffsplätzen befinden, aus denen der Kommissionierer auf Anweisung der Systemsteuerung die geforderte Pickmenge entnimmt.

26. Kommissionierverfahren nach einem der Ansprüche 22 bis 25, **dadurch gekennzeichnet, dass** die Zugriffs- oder Bereitstellplätze in Regalen oder in Durchlaufkanälen möglichst nahe den Auftragsablagen griffgünstig angeordnet sind.

27. Kommissionierverfahren nach einem der Ansprüche 22 bis 26, **dadurch gekennzeichnet, dass** die Auftragsablagen entweder bewegliche Ablagebehälter sind, die von der Förderanlage nacheinander den Kommissionierzonen zugeführt werden, oder nebeneinander angeordnete stationäre Abwurfschächte in parallel arbeitenden Kommissionierzonen sind.

28. Kommissionierverfahren nach einem der Ansprüche 22 bis 27, **dadurch gekennzeichnet, dass** die zu einem Auftrag gehörenden Pickmengen in die zugeordneten Ablageschächte abgelegt werden, aus denen sie nach Fertigstellung eines Auftrags auf den unterhalb verlaufenden Sammelförderer entleert und abgefördert werden.

29. Kommissionierverfahren nach einem der Ansprüche 22 bis 28, **dadurch gekennzeichnet, dass** die aktuellen Entnahmeplätze dem Kommissionierer durch die Systemsteuerung entweder über stationäre Leuchtanzeigen angegeben werden, die an den Bereitstellplätzen angebracht sind, oder durch ein mobiles Terminal, das der Kommissionierer am Arm oder auf einem Kommissionierwagen mit sich führt.

30. Kommissionierverfahren nach einem der Ansprüche 22 bis 29, **dadurch gekennzeichnet, dass** der Ablagebehälter oder der Ablageschacht für den aktuell bearbeiteten Auftrag dem Kommissionierer entweder durch eine Leuchtanzeige am Ablageplatz oder ebenfalls über ein mobiles Terminal angezeigt wird.

31. Kommissionierverfahren nach einem der Ansprüche 22 bis 30, **dadurch gekennzeichnet, dass** die Entnahme und die Ablage an den stationären Anzeigen bzw. über das mobile Terminal vom Kommissionierer quittiert werden.

**Claims**

1. A method of order-picking articles (26) from a first number of providing sections (16) into a corresponding number of order-depositing sections (18) by means of a second number of order-pickers (20),

   - wherein a respective order-picking zone (14) is formed by a providing section (16), in which a certain assortment of articles is provided, and an order-depositing section (18), on which articles (26) which are put together for an order from the assortment of articles are deposited, this resulting in the formation of a first number of order-picking zones (14) which, together, form an order-picking region (12), and
   - wherein an order-picking computer (28) generates zone orders for the order-picking zones (14) and communicates these to the order-pickers (20),

   **characterized in that**
   in an order-picking zone (14) only one order-picker (20) respectively picks orders, with the result that the first number of order-picking zones (14) is equal to the second number of order-pickers (20), and that the order-picking computer (28) sets the boundaries (15) between adjacent order-picking zones (14) in a variable manner by means of a zone-allocation strategy (Z) in order to adapt the size of the order-picking zones (14) in the order-picking region (12) and/or the number of order-picking zones (14) in the order-picking region (20) to variable order-picking influencing factors (L).

2. The order-picking method as claimed in claim 1, **characterized in that** the order-picking influencing factors (L) include the order-picking efficiency (L) of the individual order-pickers (20).

3. The order-picking method as claimed in claim 1 or 2, **characterized in that** the order-picking influencing factors (L) include the number of order-pickers available.

4. The order-picking method as claimed in any of claims 1 to 3, **characterized in that** the assortments of articles in the order-picking zones (14) are different and supplement one another to form an overall assortment.

5. The order-picking method as claimed in claim 4, **characterized in that** the order-picking influencing factors (L) include the number of zone orders per unit of time.

6. The order-picking method as claimed in claim 4 or 5, **characterized in that** the order-picking computer (28) receives customer orders and divides them up into a third number of zone orders, and **in that** the order-picking computer (28) uses an order-allocation strategy (A) to prioritize those customer orders of which the zone orders involve order-picking zones (14) in which the order-depositing sections (18) are working below-average capacity.

7. The order-picking method as claimed in claim 6, **characterized in that** the order-allocation strategy (A) is subordinate to the zone-allocation strategy (Z) in the manner of a cascade.

8. The order-picking method as claimed in any one of the claims 4 to 7, **characterized in that** the order-picking computer (28) evaluates the popularity (G) of the articles (26) of the overall assortment by means of an occupancy strategy (B) and compiles the assortments of articles of the individual order-picking zones (14) in dependence on the result of this evaluation such that the workload on the order-pickers (20) essentially is uniform.

9. The order-picking method as claimed in claim 8, **characterized in that** an article (26) of which the popularity (G) changes such that the workload of the order-picker (20) in whose order-picking zone (14) the article (26) is present, changes by more than a certain threshold value in relation to the average workload of the order-pickers (20), is assigned, by the order-picking computer (28), to another order-picking zone (14).

**10.** The order-picking method as claimed in claim 8 or 9, **characterized in that** the zone-allocation strategy (Z) is subordinate to the occupancy strategy (B) in the manner of a cascade.

**11.** The order-picking method as claimed in any one of claims 1 to 10, **characterized in that** at least one providing section (16') has a flow channel (40), the front providing end (42) of which is arranged in a depositing region of the order-picker.

**12.** The order-picking method as claimed in claim 11, **characterized in that** a fourth number of flow channels (40) is arranged in the providing sections, wherein at the rear supply end of the flow channel (40) a supply aisle (46) is arranged.

**13.** The order-picking method as claimed in claim 12, **characterized in that** a storage and retrieval unit (48) travels in the supply aisle (46) in a manner controlled by the order-picking computer (28) in order for at least some of the articles (26) of the overall assortment to be supplied in an automated manner.

**14.** The order-picking method as claimed in any one of claims 1 to 13, **characterized in that** at least one order-depositing section (18) has a fifth number of intermediate-storage containers (24), each of which is designed for receiving at least one article (26) from the assortment of articles.

**15.** The order-picking method as claimed in claim 14, **characterized in that** a region-specific conveyor (30) is arranged beneath or above the intermediate-storage containers (24).

**16.** The order-picking method as claimed in claim 15, **characterized in that** the order-picking computer (28) can select intermediate-storage containers (24) and open them downwardly in an automated manner in order for the articles (26), which are stored therein on an intermediate basis, to be deposited onto the region-specific conveyor (30).

**17.** The order-picking method as claimed in claim 15 or 16, **characterized in that** the region-specific conveyor (30) has a conveying belt (32).

**18.** The order-picking method as claimed in claim 16 or 17, **characterized in that** the region-specific conveyor (30) is oriented parallel to an axis (21) which is formed by the depositing regions of the order-pickers (20) in the order-picking zones (14).

**19.** The order-picking method as claimed in any one of claims 15 to 18, **characterized in that** the order-picking computer (28) controls the region-specific conveyor (30) such that the articles (26) which are deposited thereon are combined to form a customer order, or part of a customer order.

**20.** The order-picking method as claimed in claim 19, **characterized in that** an order-container conveyor (36) is oriented transversely to the region-specific conveyor (30), and **in that** the order-picking computer (28) controls the region-specific conveyor (30) and the order-container conveyor (36) such that the articles (26) which are deposited on the region-specific conveyor (30) are transferred into an order container (34) provided on the order-container conveyor (36).

**21.** An order-picking apparatus, particularly for conducting the method of any of claims 1 to 20, having a first number of providing sections (16) and a corresponding number of order-depositing sections (18) for order-picking articles from the providing sections (16) and depositing articles (26) on the order-depositing sections (18) by means of a second number of order-pickers (20),

- wherein a respective order-picking zone (14) is formed by a providing section (16), in which a certain assortment of articles is provided, and an order-depositing section (18), on which orders which are put together from the assortment of articles are deposited, this resulting in the formation of a first number of order-picking zones (14) which, together, form an order-picking region (12), and
- wherein an order-picking computer (28) for the order-picking zones (14) generates zone orders in each case and communicates these to the order-pickers (20),

**characterized in that**
in each case only one order-picker (20) is situated in an order-picking zone (14), with the result that the first number of order-picking zones (14) is equal to the second number of order-pickers (20), and **in that** the order-picking computer (28) is designed for setting the boundaries (15) between adjacent order-picking zones (14) in a variable manner by means of a zone-allocation strategy (Z) in order to adapt the size of the order-picking zones (14) in the order-picking region (12) and/or the number of order-picking zones (14) in the order-picking region (12) to variable order-picking influencing factors (L).

**22.** A method of order-picking from a provided assortment of articles, in accordance with predetermined orders, with the aid of an order-picking system, comprising:

- a number $N_B$ of providing units $B_i$ which is determined by the extent of the assortment of articles, i.e. the overall number of articles,
- a number $N_A$ of order-depositing areas $A_i$ which depends on the maximum throughput and the number of orders which are to be simultaneously processed,
- a number $N_k$ of order-pickers who work in $N_K$ parallel order-picking zones, the number of which depends on the currently required throughput, the picking efficiency of the individual order-pickers, and the operational strategies, and
- a conveying installation by means of which the picking units are conveyed away from the order-picking zones and, together with the picking units from other regions, conveyed to packing locations or shipping,
- the order-picking process being initiated, controlled and monitored in accordance with certain operational strategies, and the interaction of the system components being coordinated and optimized in a targeted manner,

**characterized by**
a dynamic order-picking zone formation, in the case of which sufficient adjacent providing locations are combined with sufficient adjacent depositing containers, to form an order-picking zone, for the sub-orders coming up in the individual order-picking zones to provide an order-picker with a full workload.

23. The order-picking method as claimed in claim 22, comprising a dynamic providing-location occupancy, by way of which, in accordance with the popularity monitored by the system-control means, the individual articles are distributed over the providing locations such that the throughputs and the amounts of work coming up in the individual order-picking zones over the course of a day are more or less equal.

24. The order-picking method as claimed in claim 22, comprising a dynamic order-allocation strategy, by way of which, once all the parts of an order for which picking has been completed have exited, the system-control means selects from the order stack, which has been organized in accordance with priority, starting from the most important order, the first order of which the items do not involve any order-picking zone in which less than a certain percentage X of the depositing locations is free.

25. The order-picking method as claimed in any one of claims 22 to 24, **characterized in that** the article units are located loosely or in containers, as providing units, at access locations, from which the order-picker removes the required picking quantity on the instructions of the system-control means.

26. The order-picking method as claimed in any one of claims 22 to 25, **characterized in that** the access or providing locations are arranged in an easy-to-reach manner in racks or in flow channels as close as possible to the order-depositing areas.

27. The order-picking method as claimed in any one of claims 22 to 26, **characterized in that** the order-depositing areas are either movable depositing containers, which are supplied to the order-picking zones one after the other by the conveying installation, or stationary ejecting chutes which are arranged one beside the other in order-picking zones operating in parallel.

28. The order-picking method as claimed in any one of claims 22 to 27, **characterized in that** the picking quantities which make up an order are deposited in the associated depositing chutes, from which, once an order has been completed, they are emptied onto the collecting conveyer running beneath and are conveyed away.

29. The order-picking method as claimed in any one of claims 22 to 28, **characterized in that** the current removal locations are specified to the order-picker by the system-control means either via stationary indicator lamps fitted at the providing locations or by a mobile terminal which the order-picker carries along on his arm or on an order-picking carriage.

30. The order-picking method as claimed in any one of claims 22 to 29, **characterized in that** the depositing container or the depositing chute for the order which is currently being processed is indicated to the order-picker either by an indicator lamp at the depositing location or likewise via a mobile terminal.

31. The order-picking method as claimed in any one of claims 22 to 30, **characterized in that** the removal and depositing operations are acknowledged by the order-picker at the stationary indicators or via the mobile terminal.

**Revendications**

1. Procédé de préparation de commande d'articles (26) en provenance d'une première pluralité de sections d'approvisionnement (16) dans une pluralité correspondante de sections de dépôt de commande (18) grâce à une deuxième pluralité de préparateurs de commande (20),

   - dans lequel une section d'approvisionnement (16), dans laquelle un assortiment d'articles déterminés est approvisionné, et une section de dépôt de commande (18), au niveau de laquelle sont déposés des articles (26) rassemblés pour une commande à partir de l'assortiment d'articles, forment respectivement une zone de préparation de commande (14), de sorte qu'une première pluralité de zones de préparation de commande (14), qui forment en commun un secteur de préparation de commande (12), sont formées, et

- dans lequel un calculateur de préparation de commande (28) crée respectivement des commandes par zone pour les zones de préparation de commande (14) et transmet celles-ci aux préparateurs de commande (20),

**caractérisé en ce que**

respectivement un seul préparateur de commande (20) prépare des commandes dans une zone de préparation de commande (14), de sorte que la première pluralité de zones de préparation de commande (14) sont égales à la deuxième pluralité de préparateurs de commande (20), et que

le calculateur de préparation de commande (28) ajuste de manière variable les limites (15) entre des zones voisines de préparation de commande (14) grâce à une stratégie d'assignation de zone (Z), pour adapter la taille des zones de préparation de commande (14) dans le secteur de préparation de commande (12) et/ou le nombre des zones de préparation de commande (14) dans le secteur de préparation de commande (12) à des facteurs variables (L) influençant la préparation de commande.

2. Procédé de préparation de commande selon la revendication 1, **caractérisé en ce que** les facteurs influençant la préparation de commande (L) incluent la capacité de préparation de commande (L) des préparateurs de commande (20) individuels.

3. Procédé de préparation de commande selon la revendication 1 ou 2, **caractérisé en ce que** les facteurs influençant la préparation de commande (L) incluent le nombre des préparateurs de commande disponibles.

4. Procédé de préparation de commande selon l'une quelconque des revendications 1 à 3, **caractérisé en ce que** les assortiments d'articles des zones de préparation de commande (14) sont différents et se cumulent pour donner un assortiment total.

5. Procédé de préparation de commande selon la revendication 4, **caractérisé en ce que** les facteurs influençant la préparation de commande (L) incluent le nombre de commandes par zone par unité de temps.

6. Procédé de préparation de commande selon la revendication 4 ou 5, **caractérisé en ce que** le calculateur de préparation de commande (28) reçoit des commandes de client et les répartit en une troisième pluralité de commandes par zone et le calculateur de préparation de commande (28) donne la priorité grâce à une stratégie d'assignation de commande (A) aux commandes de client dont les commandes par zone concernent des zones de préparation de commande (14) dont les sections de dépôt de commande (18) sont utilisées à une capacité inférieure à la moyenne.

7. Procédé de préparation de commande selon la revendication 6, **caractérisé en ce que** la stratégie d'assignation de commande (A) est subordonnée à la stratégie d'assignation de zone (Z), à la manière d'une cascade (38).

8. Procédé de préparation de commande selon l'une quelconque des revendications 4 à 7, **caractérisé en ce que** le calculateur de préparation de commande (28) évalue l'occurrence (G) des articles (26) de l'assortiment total grâce à une stratégie d'occupation (B) et rassemble les assortiments d'articles des zones individuelles de préparation de commande (14) en fonction du résultat de cette évaluation, de sorte que les préparateurs de commande (20) sont utilisés à une capacité essentiellement régulière.

9. Procédé de préparation de commande selon la revendication 8, **caractérisé en ce que** le calculateur de préparation de commande (28) assigne à une autre zone de préparation de commande (14) un article (26) dont l'occurrence (G) se modifie de sorte que l'utilisation de la capacité du préparateur de commande (20), dans la zone de préparation de commande (14) duquel l'article (26) arrive, se modifie par rapport à l'utilisation moyenne de la capacité du préparateur de commande (20) d'une valeur supérieure à une valeur de seuil déterminée.

10. Procédé de préparation de commande selon la revendication 8 ou 9, **caractérisé en ce que** la stratégie d'assignation de zone (Z) est subordonnée à la stratégie d'occupation (B), à la manière d'une cascade (38).

11. Procédé de préparation de commande selon l'une quelconque des revendications 1 à 10, **caractérisé en ce qu'**au moins une section d'approvisionnement (16') présente un canal de passage (40), dont l'extrémité d'approvisionnement (42) antérieure est placée dans un secteur d'opération de dépôt du préparateur de commande.

12. Procédé de préparation de commande selon la revendication 11, **caractérisé en ce qu'**une quatrième pluralité de canaux de passage (40) sont prévus dans les sections d'approvisionnement (16') au niveau de l'extrémité d'insertion (44) postérieure desquelles est placé un passage d'insertion (46).

13. Procédé de préparation de commande selon la revendication 12, **caractérisé en ce qu'**un chariot de magasinier (48) est mis en mouvement dans le passage d'insertion (46) de manière contrôlée par le calculateur de préparation de commande (28) pour entreposer de manière automatique au moins une partie des articles (26) de l'assortiment total.

14. Procédé de préparation de commande selon l'une quelconque des revendications 1 à 13, **caractérisé en ce qu'**une section de dépôt de commande (18) présente une cinquième pluralité de conteneurs de stockage temporaire (24), qui sont conçus respectivement pour la réception d'au moins un article (26) en provenance de l'assortiment d'articles.

15. Procédé de préparation de commande selon la revendication 14, **caractérisé en ce qu'**un convoyeur de secteur (30) est disposé en dessous ou au-dessus du conteneur de stockage temporaire (24).

16. Procédé de préparation de commande selon la revendication 15, **caractérisé en ce que** le calculateur de préparation de commande (28) peut sélectionner des conteneurs de stockage temporaire (24) et peut les ouvrir de manière automatisée par le bas, pour distribuer sur le convoyeur de secteur (30) les articles (26) stockés à l'intérieur de manière temporaire.

17. Procédé de préparation de commande selon la revendication 15 ou 16, **caractérisé en ce que** le convoyeur de secteur (30) présente une bande transporteuse (32).

18. Procédé de préparation de commande selon la revendication 16 ou 17, **caractérisé en ce que** le convoyeur de secteur (30) est orienté parallèlement à un axe (21) formé par les secteurs d'opération de dépôt des préparateurs de commande (20) dans les zones de préparation de commande (14).

19. Procédé de préparation de commande selon l'une quelconque des revendications 15 ou 18, **caractérisé en ce que** le calculateur de préparation de commande (28) manoeuvre le convoyeur de secteur (30), de sorte que les articles (26) qui sont déposés dessus sont rassemblés en une commande de client ou une partie de commande de client.

20. Procédé de préparation de commande selon la revendication 19, **caractérisé en ce qu'**un convoyeur de conteneur de commande (36) est orienté transversalement au convoyeur de secteur (30) et le calculateur de préparation de commande (28) manoeuvre le convoyeur de secteur (30) et le convoyeur de conteneur de commande (36), de sorte que les articles (26) déposés sur le convoyeur de secteur (30) sont transférés dans un des conteneurs de commande (34) qui sont à disposition sur le convoyeur de conteneur de commande (36).

21. Dispositif de préparation de commande, en particulier pour la mise en oeuvre du procédé selon l'une quelconque des revendications 1 à 20, comportant une première pluralité de sections d'approvisionnement (16) et une pluralité correspondante de sections de dépôt de commande (18) en vue de la préparation de commande d'articles issus des sections d'approvisionnement (16) et du dépôt d'articles (26) au niveau des sections de dépôt de commande (18), grâce à une deuxième pluralité de préparateurs de commande (20),

   - dans lequel une section d'approvisionnement (16), dans laquelle est préparé un assortiment d'articles déterminés, et une section de dépôt de commande (18), au niveau de laquelle sont déposés des commandes assemblées en provenance de l'assortiment d'articles, forment respectivement une zone de préparation de commande (14), de sorte qu'une première pluralité de zones de préparation de commande (14), qui forment en commun un secteur de préparation de commande (12), sont formées, et
   - dans lequel un calculateur de préparation de commande (28) crée respectivement des commandes par zone pour les zones de préparation de commande (14) et transmet celles-ci aux préparateurs de commande (20),

   **caractérisé en ce que**
   respectivement un seul préparateur de commande (20) est placé dans une zone de préparation de commande (14), de sorte que la première pluralité de zones de préparation de commande (14) sont égales à la deuxième pluralité de préparateurs (20) de commande, et que
   le calculateur de préparation de commande (28) est conçu pour ajuster de manière variable les limites (15) entre des zones voisines de préparation de commande (14) grâce à une stratégie d'assignation de zone (Z), pour adapter la taille des zones de préparation de commande (14) dans le secteur de préparation de commande (12) et/ou le nombre des zones de préparation de commande (14) dans le secteur de préparation de commande (12) à des facteurs variables (L) influençant la préparation de commande.

22. Procédé de préparation de commande à partir d'un assortiment d'articles approvisionné selon des commandes spécifiées grâce à un système de préparation de commande, présentant :

- un nombre $N_B$ d'unités de préparation $B_i$, qui est déterminé par l'amplitude de l'assortiment d'articles, c'est-à-dire le nombre total des articles,

- un nombre $N_A$ de dépôts de commande $A_i$, qui dépend du débit maximal et du nombre de commandes à traiter simultanément,

- un nombre $N_K$ de préparateurs de commande, qui travaillent dans $N_K$ zones parallèles de préparation de commande, dont le nombre dépend du débit nécessaire à ce moment, de la capacité de prélèvement des préparateurs individuels de commande et des stratégies de fonctionnement, et

- une installation de convoyage, par laquelle les unités de prélèvement sont réclamées auprès des zones de préparation de commande et sont convoyées en commun avec les unités de prélèvement provenant d'autres secteurs jusqu'à des emplacements d'emballage ou jusqu'à l'expédition,

- dans lequel le procédé de préparation de commande est déclenché, commandé et contrôlé par des stratégies de fonctionnement déterminées et dans lequel la coopération des composants du système est coordonnée et optimisée en fonction du but,

**caractérisé en ce que**
une formation dynamique de zones de préparation de commande, dans laquelle respectivement autant d'emplacements de préparation voisins sont rassemblés avec autant de conteneurs de dépôt situés les uns à côté des autres pour donner une zone de préparation de commande, de sorte que les commandes partielles apparaissant dans les zones individuelles de préparation de commande utilisent complètement la capacité d'un préparateur de commande.

23. Procédé de préparation de commande selon la revendication 22, **caractérisé par** une occupation dynamique de l'emplacement d'approvisionnement, selon laquelle les articles individuels correspondant à l'occurrence surveillée par la commande de système sont répartis sur les emplacements d'approvisionnement, de sorte que le débit et la charge de travail dans les zones individuelles de préparation de commande sont de tailles approximativement identiques au cours d'une journée.

24. Procédé de préparation de commande selon la revendication 22 ou 23, **caractérisé par** une stratégie dynamique d'assignation de commande, selon laquelle la première commande, dont la position ne concerne aucune zone de préparation de commande, est sélectionnée par la commande de système à partir de la pile de commande organisée par ordre de priorité en partant de la commande la plus urgente, après la sortie de toutes les quantités partielles d'une commande déjà préparée, et dans laquelle moins d'un pourcentage X déterminé des emplacements de dépôt est libre.

25. Procédé de préparation de commande selon l'une quelconque des revendications 22 à 24, **caractérisé en ce que** les unités d'articles se trouvent en tant qu'unités d'approvisionnement, en vrac ou dans des conteneurs, sur des emplacements d'accès sur lesquels le préparateur de commande prélève la quantité de prélèvement requise sur indication de la commande de système.

26. Procédé de préparation de commande selon l'une quelconque des revendications 22 à 25, **caractérisé en ce que** les emplacements d'accès ou d'approvisionnement sont rangés commodément sur des rayonnages ou dans des canaux de passage le plus près possible des dépôts de commande.

27. Procédé de préparation de commande selon l'une quelconque des revendications 22 à 26, **caractérisé en ce que** les dépôts de commande sont des conteneurs de dépôt mobiles, qui sont amenés aux zones de préparation de commande les uns après les autres par l'installation de convoyage, ou des goulottes stationnaires de déversement disposées les unes à côté des autres dans des zones de préparation de commande travaillant en parallèle.

28. Procédé de préparation de commande selon l'une quelconque des revendications 22 à 27, **caractérisé en ce que** les quantités de prélèvement appartenant à une commande sont déposées dans les goulottes de dépôt assignées, à partir desquelles elles sont, selon l'achèvement d'une commande, vidées sur le convoyeur collecteur passant en dessous et réclamées.

29. Procédé de préparation de commande selon l'une quelconque des revendications 22 à 28, **caractérisé en ce que** les emplacements de prélèvement en cours sont indiqués au préparateur de commande grâce à la commande de système par l'intermédiaire d'affichages lumineux stationnaires qui sont apposés sur les emplacements d'approvisionnement, ou grâce à un terminal mobile que le préparateur de commande emmène avec lui sur le bras ou sur un chariot de préparation de commande.

30. Procédé de préparation de commande selon l'une quelconque des revendications 22 à 29, **caractérisé en ce que** le conteneur de dépôt ou la goulotte de dépôt pour la commande en cours de traitement est indiqué(e) au préparateur de commande grâce à un affichage lumineux sur l'emplacement de dépôt ou également par l'intermédiaire d'un terminal mobile.

31. Procédé de préparation de commande selon l'une quelconque des revendications 22 à 30, **caractérisé en ce qu'**il est donné quitus de la réception et du dépôt au préparateur de commande sur les affichages stationnaires ou par l'intermédiaire du terminal mobile.

Fig.1

Fig.2

Fig.3

Fig.4

Fig.5

Fig.6

Fig.7

Fig.8

Fig.9

EP 1 747 155 B1

Fig.10

Fig.11

Fig.12

EP 1 747 155 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0839113 B1
- WO 9636547 A
- EP 0831113 B1
- US 4870799 A

**In der Beschreibung aufgeführte Nicht-Patentliteratur**

- **GUDEHUS, T.** *Grundlagen der Kommissioniertechnik,* 1973
- **GUDEHUS, T.** Logistik, Grundlagen, Strategien, Anwendungen. Springer, 1999
- VDI-Richtlinie 3590 Kommissioniersysteme. VDI-Verlag, 1975
- VDI-Richtlinie 3590 Kommissioniersysteme. VDI-Verlag, 1976
- VDI-Richtlinie 3590 Kommissioniersysteme. VDI-Verlag, 1977
- **GRAZ.** *Parallel Picking System,* 2004